Europäisches Patentamt

European Patent Office

Office européen des brevets

(19)

(11) Publication number: 0 472 942 B1

(12) EUROPEAN PATENT SPECIFICATION

(45) Date of publication of patent specification: 20.09.95    (51) Int. Cl.$^6$: **D04H 1/64**

(21) Application number: 91112918.7

(22) Date of filing: 31.07.91

(54) Elastomeric saturated nonwoven material, method of making same and uses of same.

(30) Priority: **31.07.90 US 561428**

(43) Date of publication of application:
**04.03.92 Bulletin 92/10**

(45) Publication of the grant of the patent:
**20.09.95 Bulletin 95/38**

(84) Designated Contracting States:
**AT BE DE DK FR GB IT**

(56) References cited:
**EP-A- 0 264 869
US-A- 3 597 256
US-A- 3 925 287
US-A- 4 741 949
US-A- 4 826 724**

(73) Proprietor: **KIMBERLY-CLARK CORPORATION
401 North Lake Street
Neenah,
Wisconsin 54956 (US)**

(72) Inventor: **Zelazoski, Leonard Eugene
3785 Junction Drive
Kennesaw, GA 30144 (US)**
Inventor: **Stokes, Bruce George
86 Farmington Drive
Woodstock, GA 30188 (US)**
Inventor: **Allison, John Patrick
2584 N. Arbor Trail
Marietta, GA 30066 (US)**

(74) Representative: **Diehl, Hermann O. Th., Dr. et al
Diehl & Glaeser, Hiltl & Partner
Patentanwälte
Postfach 19 03 65
D-80603 München (DE)**

Rank Xerox (UK) Business Services
(3.10/3.09/3.3.3)

**Description**

The present invention is concerned with an elastomeric nonwoven material, a method of making such material and uses of same.

Elastomeric nonwoven materials, such as elastomeric meltblown nonwoven web materials, are known. Thus, U.S. Patent No. 4,741,949 to Morman, et al, the contents of which are incorporated herein by reference in their entirety, describes elastic nonwoven webs including a coherent nonwoven web of, e.g., elastic fibers formed from a polyetherester material. The elastic fibers are formed by a meltblowing technique. This patent discloses that non-elastic fibers and/or particulate material may also be included in the web. Similarly, U.S. Patent No. 4,323,534 to Des Marais discloses elastic nonwoven webs of elastomeric fibers, the fibers being formed by a meltblowing technique and being made of a thermoplastic rubber that is an A-B-A block copolymer where A is a thermoplastic polymer and B is poly(ethylene-butylene), wherein the thermoplastic polymer can be polystyrene.

While elastomeric nonwoven materials (e.g., elastomeric meltblown webs) are known, it is desired to provide elastomeric nonwoven material of improved properties. Specifically, it is desired to provide elastomeric nonwoven material having improved internal cohesion and surface abrasion resistance, launderability/color retention, all with no loss of hand; and which can have suede-like attributes, including suppleness, flexibility and leather-like hand.

Various impregnated nonwoven webs are known. Thus, U.S. Patent No. 3,502,763 to Hartmann discloses nonwoven fibrous fleeces having a fabric structure characterized in that the fabric is constituted by monofilament strands gathered together in a manner to provide a fabric thereof with statistically varying directions of filaments within the strands, the filaments being arrayed in a woven or knit-like pattern. The filaments are formed from fiber-forming polymer fed into and extruded from a plurality of spinnerettes, each of which consists of a linear row or line of more than, for example, 100 holes, with filaments after extrusion through the holes being carried off by heated gas currents acting to draw and orient the filaments. This patent discloses that, due to variation in gas and polymer stream velocity over the slot width, the fabrics have good strength and toughness since mechanical stress is absorbed by filaments having varying elongation characteristics. This patent further discloses that by subsequent impregnation of the fleece with synthetic resins or sizes, the properties of the products of the invention can be improved. Illustratively, this patent discloses that impregnation with silicone resins results in improved ironability; and that a substantial improvement in launderability has been achieved by treatment with cross-linking resins, such as those containing free methylol groups.

U.S. Patent No. 4,107,374 to Kusunose, et al, discloses a nonwoven fabric, usable as a substratum sheet for artificial leather, having a relatively high flexural rigidity, the fabric being comprises of numerous fibrous bundles entangled with each other, the fibrous bundles consisting of a plurality of extremely fine filaments or fibers having a denier of 0.005-0.5*and spontaneously adhering to each other without using an adhesive. This patent discloses that the fibrous bundles may consist of a regenerated cellulose rayon, cellulose diacetate, cellulose triacetate or a synthetic polymer, for example, polyamide, polyacrylonitrile, polyethylene or polypropylene. This patent further discloses that the described nonwoven fabric can be converted into an artificial leather by impregnating the fabric with an elastic synthetic polymer, for example, polyurethane, synthetic rubber such as NBR and SBR, elastic polyvinyl chloride; elastic acrylic polymers; polyaminoacid; or elastic copolymers of two or more monomers for the above-mentioned polymers. This patent discloses that the resultant leather-like sheet may be divided into two more pieces having a desired thickness by slicing the sheet with a slicer along the surface of the sheet.

U.S. Patent No. 4,656,081 to Ando, et al discloses a meltblown nonwoven sheet having an even and smooth surface, useful for retaining heat and heat insulation, the sheet being composed mainly of fine fibers which are individually distributed substantially throughout the sheet and mainly oriented in the length-wise direction, the sheet also including yarn-like fiber bundles of fine fibers which are also oriented in the length-wise direction of the sheets, the yarn-like fiber bundles outnumbering the fine fibers on one surface of the sheet material and the fine fibers outnumbering the yarn-like fiber bundles on the other surface of the sheet material. This patent discloses that synthetic organic polymers usable for forming the sheet include polymers capable of melt spinning such as polyolefin, polyester, polyamide, polyurethane, fluorine type polymer, ion type polymer, etc. This patent further discloses that it is possible to produce synthetic leather by impregnating a layered sheet with an elastic resin and thereafter subjecting it to a buffing process or a coating process.

* 1 denier = 1/9 tex

2

U.S. Patent No. 4,434,205 to Fujii, et al discloses an artificial leather made by impregnating a specific nonwoven web substrate with an elastic polymer material. The substrate can be either (1) a nonwoven fabric composed of a plurality of stacked and intertwined long fibers defining one of cross-sectional planes extending between one surface of the nonwoven fabric or a part thereof, and another surface of the nonwoven fabric or a part thereof, and (2) a nonwoven fabric laminate obtained by laminating a woven or nonwoven fabric on a nonwoven fabric or a compressed form thereof, and, if required, compressing the resulting laminate, the latter mentioned nonwoven fabric being composed of a plurality of stacked and intertwined long fibers defining one of cross-sectional planes extending between one surface of the latter mentioned nonwoven fabric or a part thereof, and another surface of the latter mentioned nonwoven fabric or a part thereof. This patent discloses that the nonwoven fabric can be prepared from fibers of a thermoplastic resin, examples of the thermoplastic resin which can be used including polyolefins such as homopolymers of ethylene, propylene, butene-ine, 4-methylpentene-1, or other alpha-olefins, copolymers thereof, and mixtures of those polymers, polyamides such as nylon 6, nylon 66, nylon 612, nylon 12, and their mixtures, polyesters such as polyethylene terephthalate, polybutylene terephthalate and polyurethane, particularly thermoplastic polyurethane, ethylene-vinyl acetate copolymers, ethylene methacrylic acid ester copolymers, and graft copolymers of polyolefins with unsaturated carboxylic acids or their derivatives. This patent further discloses that any polymer used in the art for making artificial leathers can be utilized as the impregnating material, preferred examples of the polymers including elastomers or elastic polymers, for instance, synthetic rubbers such as polyurethane, NBR and SBR, polyvinyl chloride, polyamide resins such as nylon 6, nylon 66 and methoxymethylated polyamide resins, acrylic polymers or copolymers thereof.

While each of U.S. patent Nos. 3,502,763; 4,107,374; 4,656,081; and 4,434,205 discloses impregnated nonwoven webs, including wherein the impregnate (saturant) is an elastic material, these patents do not disclose that the formed material is elastomeric. Furthermore, these patents do not disclose that the formed materials have improved surface abrasion resistance, or other desired properties provided by the present invention.

U.S. Patent No. 4,812,357 to O'Rell, et al discloses a resilient, compressible printing blanket with dimensional stability and compressibility, having an intermediate stabilizing layer of high modulus, thermoplastic reinforced elastomer, between a layer of compressible rubber and an outer printing surface. The intermediate layer is made of a thermoplastic reinforced elastomeric composition including an elastomer plus a thermoplastic polymer. Illustrative elastomers include natural rubbers, fluoroelastomers, SBR, EPDM, butyl rubbers, nitrile rubbers, neoprenes, and polyurethanes, among others. The thermoplastic reinforcing polymer should be in the form of a fiber, and can be made of polyolefins, polyvinyl chloride, polyamides, etc. The weight ratio of elastomer to thermoplastic polymer is from about 90:10 to about 10:90, and the thermoplastic polymer has a high tensile modulus structure. The blanket as disclosed also includes a compressible layer which may either be foamed or unfoamed, although a foamed layer is preferred; and may be formed of any elastomeric material which has good integrity and resilience, including natural rubber, synthetic rubbers such as nitrile, polyisoprene, polybutadiene, butyl rubber, styrene-butadine copolymers and ethylene-propylene copolymers, polyacrylic polymers, polyurethanes, epichlorohydrins, chlorosulfonated polyethylenes, silicone rubbers or fluorosilicone rubbers.

While U.S. Patent No. 4,812,357 discloses a printing blanket including a component layer of thermoplastic reinforced elastomer and a compressible layer, it is still desired to provide a printing blanket including a sheet having high Z-direction compressibility and recovery (resilience), which can be easily formed, as well as the component layer per se.

US-A-3 925 287 to Andersen discloses ethylene/vinyl chloride/acrlymide/N-(alkoxymethyl)acrylamide interpolymers that are useful as bonding agents for nonwoven fibers. The nonwoven fibrous materials used according to this document can be prepared by various methods like airlaying, spraying and spunbonding.

U.S. Patent No. 3 597 256 discloses a microporous vapor permeable sheet material of a nonwoven fibrous web which is impregnated with a polymeric binder, consisting essentially of butadiene and acrylonitrile. The prepartion method of the web and the fibers used thereby are of no relevance to the present invention.

EP-A-0 264 869 discloses a combination of an acrylic latex binder and fibers whereby the latex binder is applied to the fibers as coating, binder or impregnant and the nonwoven fabric is manufactured by spinning, carding, air laying and wet laying. The fibers are made out of natural or synthetic material.

Accordingly, it is still desired to provide an elastomeric nonwoven material, and method of making such material, wherein the material which can be provided with suede-like attributes including suppleness, flexibility and leather-like hand, and which has surface abrasion resistance and launderability/color retention with no loss of hand. This object is solved by the elastomeric saturated nonwoven material of independent claim 1 and the method of independent claims 14 and 20. Further advantageous features, aspects and details of the invention are evident from the dependent claims, the description, examples and drawings. It is further desired to provide an elastomeric nonwoven material, and method of making such material, having various uses or applications including as a component of a printing blanket. This object is solved by the printing blanket and the printing cushion of independent claim 22. Further advantageous features, aspects and details of these applications are evident from the dependent claims, the description, examples and drawings. The claims are intended to be understood as a first non-limiting approach of defining the invention in general terms.

The invention provides an elastomeric nonwoven material having internal cohesion and surface abrasion resistance, launderability/color retention, with no loss of hand, and which can be provided with suede-like attributes including flexibility and a leather-like hand and the method of making such material.

In addition, the present invention provides elastomeric nonwoven materials utilizing a fibrous nonwoven web saturated with an impregnate and having desired properties including Z-direction (thickness direction) resilience and/or machine direction and cross machine direction elasticity.

Accordingly, it is an aspect of the present invention to provide an elastomeric nonwoven material having a fibrous nonwoven web, that is abrasion resistant and has good launderability, yet which retains the original hand of the material, and a method of producing such material.

It is a further aspect of the present invention to provide an elastomeric nonwoven material including a fibrous web, that can be provided with suede-like properties with substantial elasticity and recovery, and can also impart a high degree of suppleness and drape to the material.

It is a further aspect of the present invention to provide an elastomeric nonwoven material including a fibrous web, that has Z-direction compressibility and recovery (resilience).

It is a further aspect of the present invention to provide an elastomeric laminate material including an elastomeric nonwoven material containing a fibrous nonwoven web, as discussed above, and a method of forming such laminate material.

It is a further aspect of the present invention to provide an elastomeric nonwoven material including a fibrous nonwoven web, that is useful for various applications such as for printing blankets.

The foregoing aspects are achieved by the present invention, which provides an elastomeric nonwoven material including a fibrous nonwoven web that is saturated with a polymeric material such that the resulting impregnated (saturant) web is elastomeric.

Desirably, the fibrous nonwoven web is made of elastomeric fibrous material; more desirably, the web is a meltblown web (made of meltblown fibers) of elastomeric fibrous material. Moreover, the web can be a coform.

A variety of elastomeric materials can be utilized for the fibrous material of the fibrous nonwoven web. Illustrative materials, and not limiting, include polyurethanes, polyetheresters, styrenic block co-polymers, EVA (ethylene vinyl acetate) and EVA derivatives.

Desirably, the fibrous nonwoven web is saturated with the polymer material (saturant), so as to form the elastomeric saturated nonwoven material. Materials for the saturant can include olefins, acrylics, vinyls, urethanes, vinyl acetates, styrene, butadiene, co-polymers of these materials, butyl rubber, natural rubber, neoprene, and similar materials such that the formed (saturated) material is elastomeric. Thus, the saturant need not necessarily be elastomeric, although it can be. The saturant can be impregnated into the fibrous web utilizing a water-borne composition (e.g., a latex composition).

The saturant composition utilized for impregnating the fibrous web can desirably include a surface active agent, to hasten impregnation of the fibrous web. In addition, a fixative (e.g., a compound which gels at higher temperatures) can be included in the saturant composition, in order to prevent migration of the saturant composition from the fibrous web after impregnation of the fibrous web. Various known impregnating methods can be utilized for forming the impregnated product. For example, the fibrous web can be subjected to dipping into the saturant composition and then squeezed to remove excess saturant (the "dip and squeeze" method); in addition, the fibrous web can be flooded with the saturant (that is, the saturant composition can be directed against the fibrous web through a shower pipe, with nip rolls being utilized to squeeze excess saturant out of the web). After impregnating the fibrous web with the saturant, the impregnated fibrous web is dried and, if necessary, the resin therein cured.

According to the present invention, the elastomeric saturated nonwoven material of the present invention has good Z-direction (thickness direction) compressibility/recovery (resiliency) properties. However, such Z-direction resiliency properties can be improved by densifying the material. Such densifying can be performed by calendering the fibrous web, either before or after impregnating the saturant into the web. Preferably, densifying is performed after impregnating the web with the saturant.

According to the present invention, the elastomeric saturated nonwoven material can form part of a laminate. Thus, the laminate can include at least two sheets (webs) of the elastomeric saturated nonwoven

EP 0 472 942 B1

material. Moreover, the laminate can include at least two webs, at least one of which is the elastomeric saturated nonwoven web, with the other web(s) illustratively being another type of web material (for example, a saturated resilient paper, woven fabric, or a film such as a polyester film, a low density polyethylene film or a high density polyethylene film). Moreover, the elastomeric saturated nonwoven material according to the present invention can be reinforced with scrim or woven material which results in material with bias stretch and recovery.

The laminate according to the present invention, including at least one elastomeric saturated nonwoven web, can be formed by conventionally known methods for bonding two or more webs. For example, a suitable adhesive, either liquid or thermoplastic, may be utilized to bond adjacent webs to each other. Such adhesives are illustrative and not limiting, and other techniques may also be used to form the laminate such as, for example, thermal bonding, adhesive bonding, pressure bonding, ultrasonic bonding, hydraulic entangling and laser bonding.

The elastomeric saturated nonwoven material of the present invention can be subjected to, e.g., sanding or napping, in order to provide material with a leather-like feel. In addition, the materials can be subsequently slit into narrow strips for knitting or weaving, to provide unique fabrics. Applications of these materials may include, but are not limited to, apparel, home furnishings, footwear, automotive fabrics and recreational fabrics.

Specific uses for the elastomeric saturated nonwoven material according to the present invention is set forth in the following. Thus, the material can be used as a flexographic printing plate cushion. The material can also be used in providing an offset printing blanket that is resilient, by incorporating a layer of the elastomeric saturated nonwoven material in its construction. Other uses for the material includes as (1) vibration dampening pads; (2) gasketing; (3) permanent care labels for garments; (4) adhesive-coated, stretchable, conformable, protective masking for delicate, sensitive, odd-shaped objects; (5) automobile headliner fabric; (6) abrasive grit coatings applied to treated fabric to provide a sanding or polishing device for wood, plastics or metal objects that have intricate contours; and (7) safety tape.

Accordingly, by the present invention an elastomeric nonwoven material is provided that can be easily produced, and that has good abrasion resistance and internal coherence and good launderability/color retention, yet which retains its original hand; and which can be used to provide a suede-like material with substantial elasticity/recovery, and with a high degree of suppleness and drape.

Fig. 1 schematically illustrates a first embodiment for forming the elastomeric saturated nonwoven material of the present invention.

Fig. 2 schematically illustrates a second embodiment for forming the elastomeric saturated nonwoven material of the present invention.

Fig. 3 schematically illustrates a third embodiment for forming the elastomeric saturated nonwoven material of the present invention.

Fig. 4 schematically illustrates the densification of the elastomeric saturated nonwoven web.

Fig. 5 schematically illustrates the formation of 2-, or 3- ply, laminates according to the present invention.

Fig. 6 illustrates an elastomeric saturated nonwoven material of the present invention incorporated in a printing plate cushion.

While the invention will be described in connection with specific embodiments, it will be understood that it is not intended to limit the invention to those embodiments. To the contrary, it is intended to cover all alterations, modifications and equivalents as may be included within the spirit and scope of the invention as defined by the appended claims.

Prior to further detailed description of the present invention, various terms used throughout the present disclosure will now be defined. The term "elastic" or "elastomeric" is used herein to mean any material which, upon application of a biasing force, is stretchable to a stretched, biased length which is at least about 125%, that is at least 1 1/4, of its relaxed, unbiased length, and which will recover at least about 40% of its stretch or elongation upon release of the stretching, elongating force. A hypothetical example which would satisfy this definition of an elastic or elastomeric material would be a one (1) inch[**]sample of a material which is elongatable to at least 1.25 inches and which, upon being elongated to 1.25 inches and released, will return to a length of not more than 1.15 inches. Many elastic materials may be stretched by much more than 25% (i.e., much more than 125% of their relaxed length), for example, some elastic materials may be stretched 100% or more, and many of these will return to substantially their original relaxed length, for example, to within 105% of their original relaxed length upon release of the stretching, elongating force.

[**]1 inch = 2.54 cm

5

As used herein, the term "meltblown fibers" means fibers formed by extruding a molten thermoplastic material through a plurality of fine, usually circular die capillaries as molten threads or filaments into a high velocity gas (e.g., air) stream which attenuates the filaments of molten thermoplastic material to reduce their diameter. Thereafter, the meltblown fibers are carried by the high velocity gas stream and are deposited on a collecting surface to form a web of randomly dispersed meltblown fibers (designated herein as a fibrous web of meltblown fibers or meltblown web). Such a process is disclosed, for example, in U.S. Patent No. 3,848,241 to Butin.

As used herein, the term "spunbonded fibers" refers to small diameter fibers which are formed by extruding a molten thermoplastic material as filaments from a plurality of fine, usually circular, capillaries of a spinnerette with the diameter of the extruded filaments then being rapidly reduced as by, for example, eductive drawing or other well-known spunbonding mechanisms. The production of spunbonded nonwoven webs is illustrated in patents such as, for example, in U.S. Patent No. 4,340,563 to Appel et al., and U.S. Patent No. 3,692,618 to Dorschner et al. The disclosures of these patents are incorporated herein by reference in their entirety.

As used herein, the terms "elongation" or "percent elongation" refer to a ratio determined by measuring the difference between a material's extended and unextended length in a particular dimension and dividing that difference by the material's unextended length in that same dimension.

As used herein, the term "Z-direction" refers to the thickness direction of a sheet of material, that is, the direction perpendicular to the plane of the length and width dimensions.

As used herein, the term "melt-spun fibrous nonwoven web" refers to a fibrous nonwoven web formed by melt-spinning processes. A melt-spun fibrous nonwoven web may be, for example, a web of meltblown fibers or a web of spunbonded filaments.

As used herein, the term "total energy absorbed" (TEA) refers to the total area (i.e., energy) under a stress versus strain (load versus elongation) curve. TEA is expressed in units of work/(length)$^2$ or (grams$_{force}$) (centimeter)/(centimeter)$^2$.

As used herein, the term "nonwoven" includes any web of material which has been formed without the use of a weaving process which produces a structure of individual fibers which are interwoven in an identifiable repeating manner. Specific examples of nonwoven webs would includes, without limitation, a meltblown nonwoven web, a spun bond nonwoven web and a carded web. Nonwoven webs generally have an average basis weight of from about 5 grams per square meter to about 300 grams per square meter (gsm). More particularly, nonwoven webs may have an average basis weight of from about 10 grams per square meter to about 100 grams per square meter.

As used herein, the term "coform material" is a composite material made of a mixture of two or more different fibers or a mixture of fibers and particulates. Such mixtures may be formed by adding fibers and/or particulates to the gas stream in which meltblown fibers are carried so that an intimate entangled commingling of meltblown fibers and of the materials (e.g., wood pulp, staple fibers and particulates such as, for example, hydrocolloid (hydrogel) particulates, commonly referred to as superabsorbents) occurs prior to collection of the meltblown fibers upon a collecting device to form a coherent web of randomly dispersed meltblown fibers and the other materials. Formation of such "coform materials" is disclosed in U.S. Patent No. 4,100,324, the contents of which are incorporated herein by reference in their entirety.

The present invention contemplates an elastomeric saturated nonwoven material including a fibrous nonwoven web (e.g., an elastic fibrous web made of meltblown fibers) impregnated (saturated) with a polymeric material, the saturated web formed being elastomeric. The present invention also contemplates a method of forming such elastomeric saturated nonwoven material. In addition, the present invention also contemplates a laminate including such elastomeric saturated nonwoven web, and a method of forming such laminate. Moreover, the present invention contemplates various applications of using such elastomeric saturated nonwoven web, including as at least a part of a printing blanket. The elastomeric saturated nonwoven material according to the present invention has Z-direction compressibility and recovery, as well as improved abrasion resistance and launderability/color retention (as compared with, for example, an elastomeric web of meltblown fibers with no impregnation), with no loss of hand. Moreover, the elastomeric saturated nonwoven material of the present invention can be provided with suede-like properties including suppleness, flexibility, drape and leather-like hand, engineered to have stretch with recovery, particularly when the saturated material is subjected to a sanding or napping procedure. In addition, the elastomeric saturated nonwoven material has extremely good internal cohesion, when the fibrous web of the elastomeric saturated nonwoven material is formed of meltblown fibers with the fibrous web having been formed through use of multiple banks of meltblowing dies (providing multiple plies of meltblown fiber layers).

As indicated previously, the elastomeric saturated nonwoven material according to the present invention includes a fibrous nonwoven web. The fibrous nonwoven web is a web of meltblown fibers, and most desirably is an elastomeric meltblown web. The webs can be formed as done conventionally. Typical processes for forming elastic nonwoven meltblown webs are disclosed in U.S. Patent No. 4,741,949 (which has already been incorporated herein by reference in its entirety) and in U.S. Patent No. 4,707,398 to Boggs. Typical mechanical properties for elastomeric meltblown webs, according to the present invention, include, e.g., a basis weight (in ounces per square yard (osy))***of 0.5-5.0 (17-70 gsm); a maximum tensile load, in grams, in the machine direction (MD) of 650-10,000, and in the cross direction (CD) of 525-8430; a maximum elongation, in percent, in the machine direction of 185-550, and in the cross direction of 255-550; a load decay, at 200% extension, in the machine direction of 25-30 and in the cross direction of 25-30; a bulk, in inches, of 0.004-0.030; a porosity, in $ft^3/ft^2/min+.$ of 58-921; and a meltblown fiber diameter, in $\mu m$, of 3.3-35.2, preferably 8.5-22.0. These typical mechanical properties of a meltblown web for use in the present invention are for illustrative purposes only, and are not limiting.

As stated previously, the elastomeric fibrous web can be a meltblown (nonwoven) web of various elastomeric materials; a specific elastomeric material is Arnitel® EM-400 (by Akzo Plastics of Arnhem Holland), a copolyetherester.

Other useful elastomeric materials include, for example, block copolymers having the general formula A-B-A' where A and A' are each a thermoplastic polymer endblock which contains a styrenic moiety such as a poly (vinyl arene), and where B is an elastomeric polymer midblock such as a conjugated diene or a lower alkene polymer. Such block copolymers may be, for example, (polystyrene/poly(ethylene-butylene)/-(polystyrene) block copolymers available from the Shell Chemical Company under the name KRATRON® G.

Other exemplary elastomeric materials may be polyurethane elastomeric materials such as, for example, those available under the name ESTANE® from B.F. Goodrich & Co., polyamide elastomeric materials such as, for example, those available under the name PEBAX® from the Rilsan Company, and polyester elastomeric materials such as, for example, those available under the trade designation Hytrel from E.I. DuPont De Nemours & Company. Formation of elastic nonwoven webs from certain polyester materials is disclosed in, for example, U.S. Patent No. 4,741,949 to Morman et al., hereby incorporated by reference in its entirety. The elastomeric material may also be a copolymer of ethylene and at least one vinyl monomer such as, for example, vinyl acetates, unsaturated aliphatic monocarboxylic acids, and esters of such monocarboxylic acids. Formation of elastic sheets from those elastic copolymers are disclosed in, for example, U.S. Patent No. 4,803,117, hereby incorporated by reference in its entirety.

Of course, the present invention is not limited to use of elastomeric meltblown webs for the fibrous nonwoven web. Other nonwoven materials, such as, for example, spunbond webs and coform webs, may also be used if they are able to provide the desired Z-direction compressibility and recovery as well as overall elasticity.

Various latexes can be used as a vehicle for impregnating the fibrous web. The saturant need not be elastomeric, as long as the saturated web retains an elastomeric property, as defined above. The various saturants can include an acrylic latex, a nitrile rubber latex, a styrene butadiene rubber latex, a natural butadiene rubber latex, a high stretch acrylic elastomer latex and a polyurethane latex. Of these different latexes, the softer the polymeric binder (saturant), such as the natural butadiene rubber, the lesser the impact on elongation and hand. The nonelastic (hard) acrylic latex gave the best improvement in tearing strength, of the above listed latexes. However, all of the structures having the impregnated latexes achieved better overall characteristics and properties as compared to the unimpregnated fibrous web.

The foregoing disclosed saturants are merely illustrative of various latexes which can be used to form the elastomeric saturated nonwoven material according to the present invention, and other latexes can also be used which, in the final product, provide an elastic material and which can be impregnated in the fibrous web without substantial damage to the web.

The impregnation can be carried out using water-containing latexes. Moreover, it is desired that a surfactant be incorporated in the saturant composition, in order to hasten impregnation (wetting out) of the fibrous web. Such surfactants can include (but are not limited to) "Igepal" 887 (a product of GAF Chemical Corp.) and "Triton" X100 (a product of Rohm & Haas Co.).

In addition, the saturant composition preferably also includes a fixative, to minimize migration of saturant in the fibrous web after impregnation, for example, during drying of the impregnated web. In this regard, considerable saturant migration can occur during drying of the more heavy weight (higher gsm)

***1 osy = 33.9 g/m²

+ 1 ft³/ft²/min = 0.028m³/0.09m²/min.

EP 0 472 942 B1

impregnated fibrous webs. Such migration can be minimized utilizing such a fixative. An illustrative fixative is "Cartafix" U (manufactured by Sandoz Chemical Co.), which gels at a temperature greater than 50°C. Generally, the fixative material can be a material which gels at temperatures achieved during drying of the impregnated web, although such fixative is not limited to such materials.

In the following paragraphs, various procedures for impregnating the fibrous nonwoven web will be discussed. Typical saturating equipment used would be a type supplied by Black-Clawson Co. This equipment would consist of a turret unwinding roll (from which the fibrous nonwoven web would be unrolled); a steel/rubber roll press nip; take-away rolls; cross-direction edge spreaders located on both edges of the web; a hold-back roll; a steam-heated drier can section; and a wind-up reel. The turret unwinding roll has sensitive tension controls to prevent "necking down" or narrowing of the web in the machine cross direction, and may include a driven unwind assist for light-weight elastomeric webs. The pressurized press nip consists of a bottom steel roll partly submerged in saturant and a rubber covered roll located on top to squeeze out excess saturant composition. Press-nip pressure can range from 30-90 psig, with a preferred range of 45-75 psig. A saturant shower pipe is located over the web just before entering the press nip, while the bottom steel roll picks up saturant in the pan. This thoroughly wets both web surfaces with an excess of saturant.

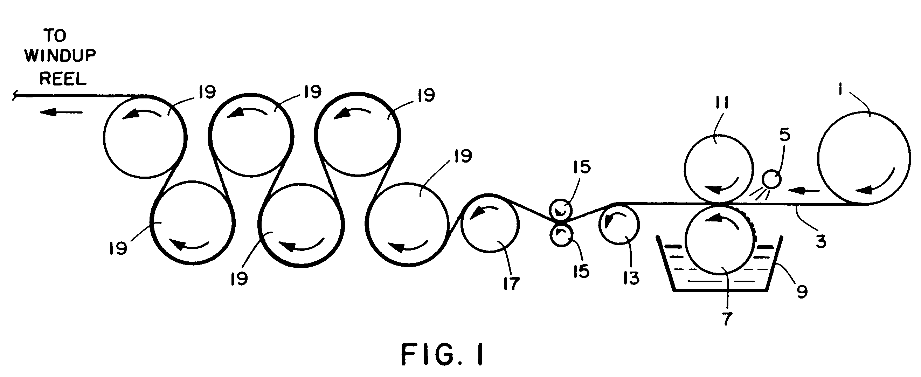

In connection with such typical saturating equipment, attention is directed to Fig. 1. This figure shows unwind roll 1 from which, for example, an elastomeric fibrous web 3 which is to be subjected to impregnation is unwound. Saturant shower pipe 5 floods the upper surface of the elastomeric web with saturant; moreover, chromed steel bottom press roll 7 picks up saturant from container 9 so as to provide the bottom surface of the elastomeric web with saturant. The web is squeezed between the chromed steel bottom press roll 7 and the rubber covered top press roll 11, so as to squeeze excess saturant from the web. The web then passes by take-away roll 13 and between cross-direction web spreading rollers 15 (one pair located adjacent each edge of the web). The web then passes by hold-back roll 17 and is dried by the steam-heated drier cans 19. The dried saturated web is then passed to the windup reel.

The saturant total solids, press pressure and fibrous web (e.g., elastomeric meltblown web) weight are all factors that affect saturant pickup levels. Saturant total solids in the saturant composition range from 10 to 60% (by weight) depending upon the desired dry saturant pickup. Dry pickup ranges from 10 to 120 dry parts of saturant per 100 dry parts of fibrous web material by weight. Preferred dry pickup ranges from 20 to 70 dry parts of saturant per 100 dry parts of fibrous web (pphp), and saturant total solids, in a range of 20-40% in the saturant composition are used. Wet saturant pickup can range from 50 to 300 wet parts per 100 parts of fibrous web material by weight.

Immediately out of the press nip, the web is passed to a bowed spreader roll to spread the web in an outward direction, as well as two sets of pinch rollers located at both edges of the web to further spread the web outward. Both devices remove wrinkling tendencies, and prevent "necking down" of the fibrous web. The hold-back roll, located just before the drier section, provides tension control in the driers. The steam heated driers are controlled to a temperature range of 200-250°F,*although such range is illustrative and not limiting. At relatively high temperatures (for example, temperatures in excess of 250°F), the impregnated fibrous web will tend to pucker, distort and degrade the inherent physical properties of the elastomeric saturated nonwoven material.

Once out of the drier section, the web is wound up on a drum reel system that can either cool or heat the dry web, depending upon the cure required of the saturant.

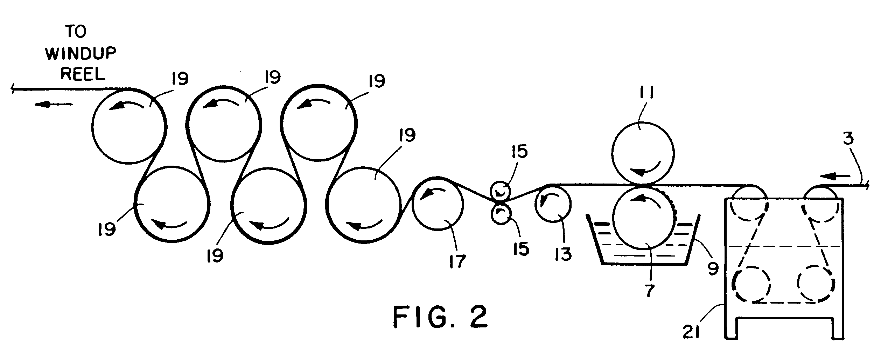

An alternative embodiment for saturating the fibrous web is the "dip and squeeze" method. This method utilizes a tank containing saturant composition, placed between the unwind roll and press nip. The entire web is submerged in the saturant composition, and the excess squeezed out at the press rolls. Such "dip and squeeze" method is schematically shown in Fig. 2. This figure utilizes the same numbers for structure which is the same as that used in Fig. 1. As can be seen, the structure of Fig. 2 differs from that of Fig. 1 in that Fig. 2 includes dip tank 21 through which the fibrous web passes, and does not contain the saturant shower pipe 5 of Fig. 1. This structure in Fig. 2 includes the press nip formed by the rubber covered top press roll 11 and chromed steel bottom press roll 7, to squeeze excess saturant from the web.

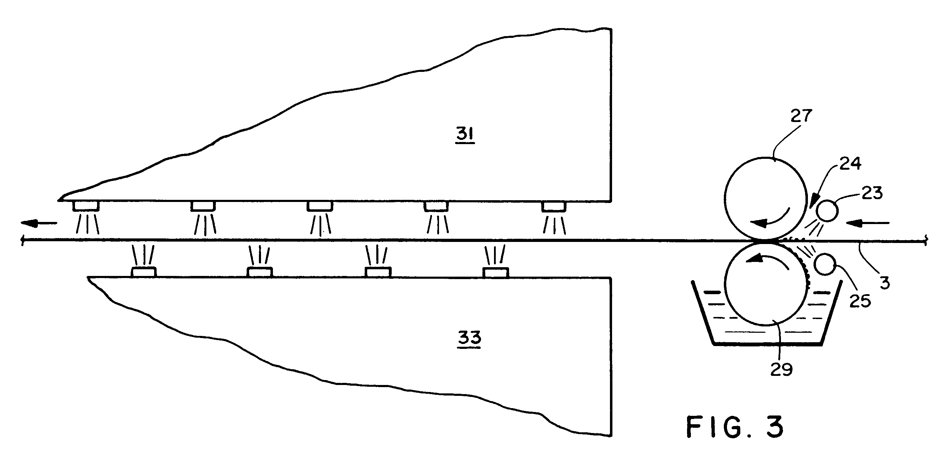

A two steel roll adjustable nip treater can also be used to saturate by applying a saturant or coating to both sides of the fibrous nonwoven web (elastomeric web). In this regard, attention is directed to Fig. 3. In this process, fibrous web 3 is passed between top and bottom flooding supply showers 23, 25, respectively, to apply saturant or coating to both surfaces of the fibrous web and to flood the nip 24 between the top chromed steel nip roll and bottom chromed steel nip roll 27, 29, respectively. The top and bottom nip rolls are adjustably movable so as to provide an adjustable nip gap. The nip gap opening is set to regulate how

* 93.3 - 121°C

8

much saturant or coating remains with the web. Fabric weight, total solids and nip gap setting all factor into the desired saturant or coating pickup. The treated web is then passed through top and bottom gas fired air impingement ovens 31 and 33, respectively; these ovens supply heated air to the top and bottom of the web to remove moisture and to float the web. Two cooling rolls at the oven exit either provide cooling of the dry, heated web and/or tension control of the web through the oven. Again, the treated web can either be wound up cool or hot, depending on the cure mechanism incorporated in the saturant or coating formulations.

In each of the foregoing processes, machine speeds can vary from 50 to 600 feet per minute + +, depending on the weight of the fibrous web, desired dry pick up and water removal rate through the drier sections. The fibrous webs can range from 0.2-5.5 ounces per square yard (6.75-185 gsm), with a preferred range of 1.0 to 5.0 ounces per square yard (34-170 gsm).

The fibrous web can be bonded or unbonded, prior to saturation. For example, where the fibrous web is an elastomeric web made of meltblown fibers, the web can be unbonded or hot bonded prior to saturation.

Various saturant latex compositions can be used for impregnating the fibrous web. Some of these have previously been discussed. To reiterate, the latexes can include, as the polymer, an elastomeric polymer such as polyurethane, natural rubber, butyl rubber, NBR, SBR, acrylics, including elastic acrylics etc.

A typical elastomeric polymer saturant formula could be constituted by the following, which is provided as exemplary and not limiting (stated values for the wet and dry compositions being parts by weight; the balance of the wet composition being water):

## Table 1

| Ingredient | % | Dry | Wet |
|---|---|---|---|
| Urethane Latex UE-40-512 | 37 | 100 | 270.3 |
| XAMA-7 | 100 | 1 | 1 |
| Ammonium Oxalate | 5 | .05 | 1.0 |
| Triton X-100 | 33 | 1.9 | 5.8 |
| Ink Pigment KR-7071 | 25 | 10 | 40.0 |
| Ammonium Hydroxide | 14 | 0.5 | 3.57 |
| TOTALS | 35.2 | 113.45 | 321.9 |

### Suppliers of Above Ingredients:

| | | |
|---|---|---|
| Crosslinker KM-10-1415 | ) | Virginia Chemicals |
| Urethane Latex UE-40--512 | ) | Permuthane, Inc. |
| Ink Pigment KR-7071 | ) | A member of the ICI Group |
| Triton X-100 | ) | Rohm & Haas Co. |

As indicated previously, the cured elastomeric saturated nonwoven material has improved properties, including improved Z-direction compressibility/recovery (resiliency), as compared to, e.g., the unsaturated fibrous web (for example, an unsaturated nonwoven web of meltblown fibers). However, to further improve the Z-direction compressibility/recovery, the nonwoven material can be subjected to a densification treatment. This can either be done on an all-steel roll calender stack or on a super calender stack where steel and fiber-filled rolls are alternated. These calender stacks can contain 7 or 90 rolls and are usually pressurized. Calendering can be done before or after saturating the fibrous web, but the preferred method is to densify after saturating.

+ + 1 ft./min = 0.30 m./min.

The density provided by the densification process ranges from 25 to 65 lbs./ft$^3$ + + +, with a preferred range being from 35 to 55 lbs./ft$^3$.

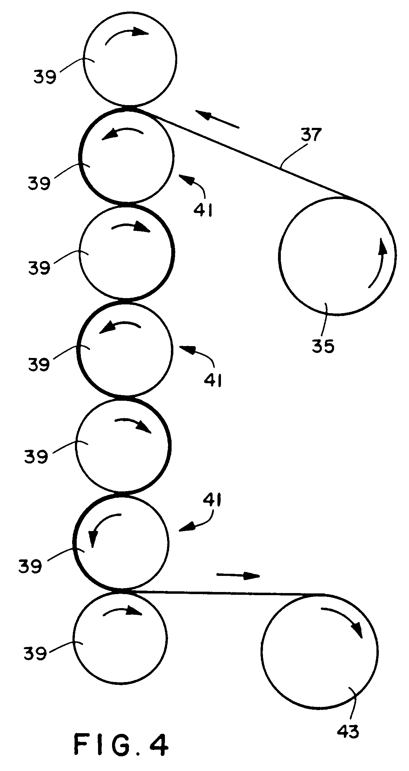

Attention is directed to Fig. 4, schematically illustrating a calender stack for densifying the nonwoven material according to the present invention. Thus, the nonwoven material (elastomeric saturated nonwoven material) 37 is unwound from the unwind roll 35, and passed between steel calender stack rolls 39 (or, in the super calender stack, as shown in Fig. 4, is passed between alternating steel calender rolls 39 and fiber filled calender rolls 41). After calendering, the densified elastomeric web is wound up on windup roll 43.

As indicated previously, the elastomeric saturated nonwoven material can be utilized by itself, or can be part of a laminate of such material and other webs, such as another elastomeric saturated nonwoven fabric, saturated resilient paper, etc. Such composite webs enhance both the machine direction and cross direction stability of the elastomeric saturated nonwoven material, without detracting significantly from Z-direction compressibility/recovery (resilience). The choice of substrates to be used for the stabilizing web is dependent upon the end use requirement.

Adhesives used to laminate composite webs can be any suitable adhesive, liquid or thermoplastic, that provides adequate bonding of the two webs. Such adhesives must, of course, be ones that retain any necessary elasticity for the laminate. Conventional adhesives are known in the art. In addition, the webs can be laminated by, e.g., thermal bonding, as is known in the art.

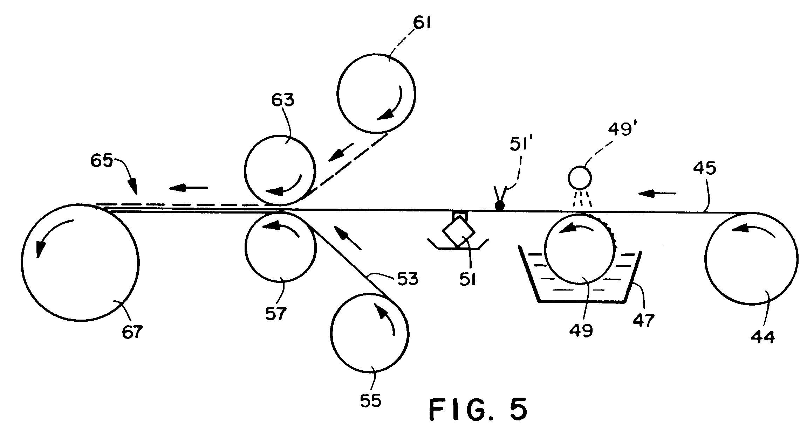

Fig. 5 schematically illustrates forming of a two-, or three-ply laminated composite according to the present invention. Generally, the laminating process includes unwinding one of the rolls of web material to be laminated, applying an adhesive to such web, positioning the second web adjacent the first web surface having the adhesive thereon, passing the adjacent webs between top and bottom bonding rolls, and then winding up the laminated composite.

Specifically, as shown in Fig. 5, the elastomeric saturated nonwoven material 45 is unwound from roll 44 and passed adjacent the wet laminating adhesive applicator 49, the adhesive being supplied by the applicator 49 from the tank 47 containing adhesive. After application of the adhesive, the web is passed by the metering device 51 (for example, a knife blade or wire wound metering rod) to provide the desired amount of adhesive. Thereafter, a second sheet (e.g., film, nonwoven fabric web, woven web, etc.) 53 is unwound from supply roll 55 and provided adjacent to the nonwoven material 45, at the side thereof to which the adhesive was applied. Thereafter, the webs 45 and 53 are passed between top and bottom bonding rolls 57, 63 (each either heated, at a temperature, for example, of 225°C or not heated (being at room temperature, or being cooled), where the webs 45 and 53 are bonded to each other to form the laminate. The laminated composite 65 is then wound on the wind up roll 67.

The top and bottom bonding rolls 63 and 57, respectively, are pressurized rolls capable of various pressures, and are heated or cooled, or at room temperature.

The foregoing describes formation of a two-ply laminated composite. A three-ply laminating composite, or a composition of more than three plies, are also within the contemplation of the present invention. In a three-ply laminated composite, adhesive is applied to the upper surface of web 45, as known in the art, and a third web 59 is unrolled from supply roll 61 to be adjacent the upper surface of web 45, prior to passage between the top and bottom bonding rolls 63 and 57, respectively. Upon passing through the bonding rollers, the three plies are laminated together.

In the foregoing has been described both the nonwoven material and laminate of the present invention, together with techniques for forming such nonwoven material and laminate. In the following paragraphs will be discussed various applications of such material and such laminate. The elastomeric saturated nonwoven material of the present invention, due to the physical properties thereof, such as elasticity, abrasion resistance, toughness, Z-direction resiliency, etc., has applications in a number of novel products.

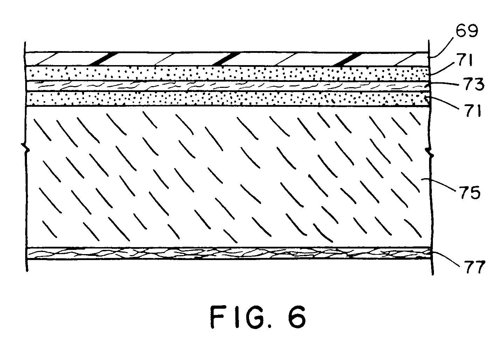

A first product application for the present invention is as a flexographic printing plate cushion. A typical flexographic printing plate cushion, utilizing at least one layer of elastomeric saturated nonwoven material according to the present invention, is shown in Fig. 6. In this Fig. 6, reference numeral 69 represents a polyester film or solvent-resistant coating layer (e.g., 0.002 inch thick); layers 71 each are a laminating adhesive, each being a total of 0.002 inches thick; layer 75 is a resilient saturated paper (for example, densified to 52.0 lbs./ft$^3$, and being 0.021 inches thick); and layer 77 is a pressure sensitive adhesive for attaching the cushion to a printing press cylinder, such layer 77 being, e.g., 0.0017 inches thick. The elastomeric saturated nonwoven material according to the present invention would be used for layer 73; illustratively, such material used as in Fig. 6 would be densified to approximately 42.5 lbs./ft$^3$, and would be 0.0133 inches thick. The total cushion thickness would be 0.040 inches, which is typical for flexographic newspaper presses.

+ + +1 lb./ft$^3$ = 16.0 kg/m$^3$

Generally, there are a wide variety of resilient flexographic printing plate cushion materials available to printers. These products are quite expensive and most are short-lived. Current cushion materials are available in a variety of thicknesses from 0.15 inches to 0.060 inches. Due to this wide range of cushion thicknesses needed for different types of flexographic printing presses, composite laminates are necessary to build the caliper economically, stabilize the elastomeric nonwoven web and to provide solvent resistance to one surface either with a coating or layer. Utilizing an elastomeric saturated nonwoven material of the present invention as a component of a resilient flexographic printing plate cushion, equivalent Z-direction compressibility/recovery (resiliency) properties to materials already on the market can be provided. Moreover, various advantages of the nonwoven material of the present invention, including improved mechanical properties, are achieved when utilizing the nonwoven material according to the present invention as part of a flexographic printing plate cushion.

Another use for the nonwoven material of the present invention is for permanent care labels for garments. Due to its softness, flexibility, launderability and gentleness to the skin, as well as its ability to be printed upon, the material according to the present invention has clear advantages over current garment labels, which typically are saturated polyethylene terephthalate nonwoven materials which tend to be stiff and harsh on the skin.

A further product application for the nonwoven material according to the present invention is as a protective coating. Since the nonwoven material according to the present invention is stretchable and conformable, a layer of such material provided with an adhesive, can conform to a surface of delicate, sensitive, odd-shaped objects so as to provide protection therefor, particularly where the finish of such object may need protection from handling, dirt and scratches.

A further product application is as an automotive headliner fabric that needs to be stretchable and conformable to fit car interiors, especially when ceiling mounted instrument panels are used.

The nonwoven material according to the present invention can also be incorporated into an offset printing blanket that is resilient.

In addition, abrasive grit coatings can be applied to the nonwoven material, to provide a sanding or polishing device for wood, plastics or metal objects that have intricate contours (that is, where cloth or paper-back abrasives are not practical). Key attributes for this use are the elasticity, toughness and conformability of layers or sheets of the nonwoven material according to the present invention.

The nonwoven material according to the present invention can be used for producing safety tape, especially for electronic clean rooms to prevent fingerprints from contaminating sensitive components.

The foregoing are just some uses of the nonwoven material according to the present invention, and are merely illustrative and not limiting. Various other applications are easily discernable by the ordinary worker in the art. Some factors which could limit use of the nonwoven material according to the present invention is that the material is easily extensible (has a low modulus which could cause web distortion); is heat sensitive to some extent (e.g., in some instances at temperatures in excess of $250°F$); and could present an elongation mismatch.

In the following are specific examples of nonwoven materials according to the present invention, and methods of producing such materials. Of course, these examples are merely illustrative, and not limiting.

Example 1

The following materials were utilized for forming saturant latex compositions:

Latexes - RHOPLEX® TR407 (ROHM & HAAS)
(acrylic emulsion-hard rubber)
HYCAR® 1572X64 (B.F. GOODRICH CHEMICAL GROUP)
(nitrile butadiene rubber)
HYCAR® V43 (B.F. GOODRICH CHEMICAL GROUP)
(high stretch acrylic elastomer)
PERMUTHANE® UE40-512 (PERMUTHANE, INC.
(aliphatic polyurethane)

Pigments - DALAMAR YELLOW, YW958-P (HEUBACH INC.)
MONOLITE BLUE, BXE-HD (I.C.I. AMERICAS INC.)
UNISPERSE RED, FBN-P1 (CIBA-GEIGY CORP.)
PERMUTHANE KR7071 (PERMUTHANE INC.)

Miscellaneous- CYMEL® 303 (AMERICAN CYANAMID)
(cross-linking agent)
BOSTEX® 378 (AKRON DISPERSIONS INC.)

(sulphur dispersion)
BOSTEX® 497B (AKRON DISPERSIONS INC.)
(zinc dibutylzimate (ZDBZ))
(accelerator and cross-linking agent)
IGEPAL® 887 (GAF CHEMICAL CORP.)
(wetting agent)
TRITON® X100 (ROHM & HAAS CO.)
(wetting agent)
BOSTEX® 422 (AKRON DISPERSIONS INC.)
(zinc oxide dispersion)
PERMUTHANE® KM10-1415 (PERMUTHANE INC.)
(cross-linking agent)

CARTAFIX® U (SANDOZ CHEMICAL CO.)
(fixative)

Saturant Compositions:

1. Latex type - Acrylic, $T_g$ = +30°C.

| | (%) | Dry | Wet |
|---|---|---|---|
| RHOPLEX® TR 407 | (45.5) | 100 | 219.8 |
| TRITON® X100 | (33) | 1.9 | 5.8 |
| CYMEL® 303 | (100) | 2.1 | 2.1 |
| Ammonium nitrate | (10) | 1.35 | 13.6 |
| Ammonium hydroxide | (14) | 2.2 | 15.7 |
| DALAMAR YELLOW, YW958-P | (45) | 10 | 22.2 |
| Water | | | 15.3 |
| TOTAL | (40) | 117.6 | 294. |

Cure: 100°C./3 hours

2. Latex type - Nitrile rubber, $T_g$ = -30°C.

| | % | Dry | Wet |
|---|---|---|---|
| HYCAR® 1572X64 | (47.2) | 100 | 211.9 |
| BOSTEX® 422 | (60) | 5 | 8.3 |
| BOSTEX® 378 | (60) | 2 | 4 |
| BOSTEX® 497B | (50) | 1 | 2 |
| IGEPAL® 887 | (20) | 1.35 | 6.8 |
| Ammonium hydroxide | (14) | 0.45 | 3.2 |
| MONOLITE BLUE,BXE-HD | (48) | 10 | 20.8 |
| Water | | | 42.8 |
| TOTAL | (40) | 120.8 | 299.8 |

Cure: 107°C./10 minutes

3. Latex type -  Elastomeric acrylic  , $T_g$ = -43°C

|  | % | Dry | Wet |
|---|---|---|---|
| HYCAR® V43 | (53) | 100 | 188.7 |
| TRITON® X100 | (33) | 1.9 | 5.8 |
| Ammonium hydroxide | (14) | 2.2 | 15.7 |
| BOSTEX® 422 | (60) | 5 | 8.3 |
| UNISPERSE RED, FBN-P1 | (42) | 10 | 23.8 |
| Water |  |  | 55.5 |
| TOTAL | (40) | 119.1 | 297.8 |

Cure:  100°C./3 hours

4. Latex type - Polyetherurethane

|  | % | Dry | Wet |
|---|---|---|---|
| PERMUTHANE® UE40-512 | (37) | 100 | 270.3 |
| PERMUTHANE® KM10-1415 | (80) | 1 | 1.3 |
| Ammonium oxalate | (5) | 0.05 | 1.0 |
| TRITON® X100 | (33) | 1.9 | 5.8 |
| PERMUTHANE® KR7071 | (25) | 10 | 40.0 |
| Ammonium hydroxide | (14) | 0.5 | 3.6 |
| TOTAL | (35) | 113.5 | 322 |

Cure:  100°C./1 hour

5. Latex type - Elastomeric acrylic  , $T_g$ = -43°C.
        (Heat-setting formulation.)

|  | % | Dry | Wet |
|---|---|---|---|
| HYCAR® V43 | (53) | 100 | 188.7 |
| TRITON® X100 | (33) | 1.9 | 5.8 |
| Ammonium hydroxide | (14) | 2.2 | 15.7 |
| BOSTEX® 422 | (60) | 5 | 8.3 |
| UNISPERSE RED, FBN-P1 | (42) | 10 | 23.8 |

14

| CARTAFIX® U | (25) | 10 | 40 |
|---|---|---|---|
| Water | | | 40.5 |
| TOTAL | (40) | 129.1 | 322.8 |

Cure: 100°C./3 hours

The following procedure was utilized for impregnating fibrous webs of meltblown "Arnitel" (a polyetherester of Akzo Corp. of Arnhem, Holland), respectively having a basis weight of 31g/m² and 187g/m², and of meltblown polypropylene, having a basis weight of 30g/m².

The saturant compositions were made up with extra ammonia and surfactant to enhance mechanical stability of the latex, and promote wetting-out of the web. The saturant composition was poured into a pan and the web was immersed before excess was expelled by passing through a nip constituted of rubber rolls (Durometer: Shore A hardness = 70) at a pressure of ten pounds/linear inch ++++. Each saturant composition was diluted to 15% solids for a second (lower) application. The samples were saturated in sequence and stacked before drying.

Drying was accomplished by laying each sheet on a "Teflon"® -coated, steam-heated can (107°C) accompanied by frequent turning to minimize saturant migration. While facile for the heavier material, manipulation of the light-weight samples was not quite so easy as only intermittent contact with the drier could be achieved without creasing or wrinkling, since the drying time was brief. Air-drying was also performed, by suspending the sheets, supported by a wooden rack, in the draft of a fume-hood. Wherever necessary samples were cured by stacking, wrapping and sealing in "Mylar"ᴿ , and heating at the prescribed temperature for an appropriate time period.

The formed sheets were then tested for various properties, including abrasion resistance (Martindale, utilizing rubber pads/12 K.Pa. (1.74 lb.in-2/0.122kg.Cm⁻²) and launderability.

The abrasion testing showed that the fibrous webs, without any saturant, could not withstand the abrasion testing. of the impregnated webs, the nonwoven material impregnated with the high stretch elastomer showed the greatest wear while the remaining impregnated materials emerged virtually unscathed. Moreover, this test showed that migration of the latex to the surfaces proffered somewhat better abrasion resistance. The low weight materials (that is, utilizing the relatively low basis weight fibrous webs) were more sensitive than the heavier webs to abrasion.

In terms of the benefit conferred on abrasion resistance by latex impregnation, these polymers can be ranked in decreasing order: "Permuthane" UE 40-512, "Rhoplex" TR407, "Hycar" 1572X64 and "Hycar" V43.

The sheets were subjected to washing in hot water and rinsing, for one and five cycles. The samples were assessed for integrity and color (Hunter Color System). The results of laundering latex-treated meltblown elastomers are similar to the ranking derived from abrasion testing.

Example 2

The following samples were subjected to testing of compressibility/recovery (resiliency) in the Z-direction:

1. Sample A - 5 OSY elastomeric meltblown web EMB base fabric, not saturated or bonded. Two layers plied up loosely.

2. Sample B - 5 OSY EMB saturated to 50 pickup (i.e., a pickup or add-on of 50 dry parts by weight of saturant to 100 dry parts by weight of fibrous web material) with polyurethane elastomer. Two samples plied up loosely.

3. Sample C - 5 OSY EMB saturated to 20 pickup with polyurethane elastomer. Two samples plied up loosely.

4. Sample D - Resilient paper, lab saturated to 60 pickup with acrylic latex, lab densified. Two samples plied up loosely.

++++1 lb./linear in. = 0.45 kg/2.5 cm

5. Sample E - One sample of "D" placed loosely on top of one sample of "B". Top sample is subjected to direct pressure of test instrument anvil.

6. Sample F - One sample of "B" placed on top of sample "D".

7. Sample G - 5 OSY EMB saturated with nitrile (NBR) elastomer to a 50 pickup. Two samples plied up loosely.

8. Sample H - 5 OSY EMB saturated with elastomeric acrylic to 50 pickup. Two samples plied up loosely.

9. Sample I - One sample "D" placed on top of one sample "H".

10. Sample J - One sample "H" placed on top of one sample "D".

11. Sample K - Continuous forms offset printing blanket (referred to in the printing industry as "stickyback"), manufactured by David M. Co., made with Kimlon® resilient paper. Rubber print surface facing up towards test anvil.

12. Sample L - "Stickyback" blanket manufactured by W.R. Grace Co. under trade name Polyfibron. Rubber print surface faces up towards test anvil.

The following test procedure was utilized for testing compressibility/recovery. A test specimen was cut to a convenient size of 3/4 to 2". An Ames caliper gage was preloaded with 12 ounces weight. Thereafter, the 0.250 inch diameter foot of such gage was raised with a lever, and the test sample was placed between the foot and the anvil. Thereafter, the foot was slowly and gently lowered onto the test sample. After ten seconds had elapsed, the caliper measurement was recorded, and referred to as an "initial caliper". Thereafter, a five pound weight was gently placed on top of the twelve ounce weight, and left in place for 30 seconds. Thereafter, the caliper measurement was recorded and the five pound weight was gently removed. This reading is referred to as "compressed". The test sample was then allowed to recover for ten seconds after removing the five pound weight but with the twelve ounce weight still in place. Thereafter, the caliper measurement was recorded, this measurement being referred to as "recovery".

The results of the compressibility/recovery for each of the samples is shown in the following Table 2. As seen in this Table 2, each of the saturated examples achieved better recovery than the unsaturated base fabric.

## TABLE 2
### COMPRESSIBILITY/RECOVERY TESTING

| Sample | Initial Caliper Mils* (w mil = .001) | Mils Compressed | % Compressed of Initial Caliper | Mils Not Recovered | % Not Recovered of Initial Caliper |
|---|---|---|---|---|---|
| A | 37.8 | 16.9 | 44.70 | 6.9 | 18.25 |
| B | 43.5 | 16.4 | 37.70 | 4.6 | 10.60 |
| C | 43.1 | 18.2 | 42.23 | 6.0 | 13.90 |
| D | 23.3 | 2.2 | 9.44 | 0.5 | 2.15 |
| E | 38.1 | 9.8 | 25.70 | 2.9 | 7.61 |
| F | 36.1 | 10.1 | 28.00 | 3.1 | 8.59 |
| G | 43.2 | 17.1 | 39.60 | 4.8 | 11.10 |
| H | 39.6 | 15.8 | 39.90 | 6.4 | 16.20 |
| I | 34.1 | 9.3 | 27.30 | 3.3 | 9.68 |
| J | 32.9 | 8.6 | 26.10 | 3.4 | 10.33 |
| K | 35.5 | 1.7 | 4.80 | 0.4 | 1.13 |
| L | 36.6 | 2.7 | 7.40 | 0.7 | 1.91 |

* 1 mil = 0.001 inch; 1 inch = 2.5 cm

Example 3

The following sample materials were tested for compressibility/recovery using the resiliency in the Z-direction.

17

1. Sample AA - 5 OSY elastomeric meltblown web (EMB) saturated to 50 pickup with polyurethane elastomer. Only one ply tested. Reported results are average of two tests.

2. Sample AB - 5 OSY EMB saturated to 20 pickup with polyurethane elastomer. Only one ply tested. Reported results are average of two tests.

3. Sample AC - Resilient paper, lab saturated to 60 pickup with acrylic latex, lab densified. Two plies (laminated) with one ply barrier coated as lab sample. The reported results are an average of two tests.

4. Sample AD - 5 OSY EMB polyurethane saturated to 50 pickup and densified.

5. Sample AE - Same as "AD" but lower density.

6. Sample AF - 5 OSY EMB saturated with hard acrylate to 50 pickup, densified to high density.

7. Sample AG - Like "AF" but lower density.

8. Sample AH - 5 OSY EMB saturated with nitrile rubber (NBR) to 50 pickup and densified.

9. Sample AI - Like "AH" but lower density.

10. Sample AJ - 5 OSY EMB saturated with nitrile rubber (NBR) to 50 pickup, and densified to a high density.

11. Sample AK like "AJ", but having a low density.

12. Sample AL - Urethane foam manufactured by Norwood Ind., and marketed by Kimberly-Clark Corp. as Kimflex , 30 mil flexographic press blanket cushion. Reported results are the average of two tests.

13. Sample AM - Urethane foam (source unknown) 40 mil flexographic press blanket cushion. Reported results are the average of two tests.

14. Sample AN - Continuous forms offset printing blanket, referred to in the printing industry as "stickyback", manufactured by David M. Co. using the Kimlon[R] resilient paper as the carcass. Rubber print surface facing up towards test anvil. Reported results are the average of two tests.

15. Sample AO - "Stickyback" forms blanket manufactured by W.R. Grace Co. under the name "Polyfibron". Rubber print surface facing up towards the foot. Reported results are the average of two tests.

The following procedure was used to find the percentage compressibility and recovery in the Z-direction for the above-described samples utilizing a Federal Dial Comparator equipped with a 0.56 inch diameter foot and a 0.252 inch diameter anvil; this procedure is an adaptation of ASTM D 1147-51T and 53T, and is meant to be used for short term compressibility and recovery at room temperature. Initially, sample chips were cut with a 1.5 inch die, and the caliper and gram weight of each chip was measured. Thereafter, major loads were placed one at a time on the anvil of the testing device and deflection readings were taken; this reading is added to the major load weight after testing, as the corrected major.

The sample is then placed on the anvil and a preload applied; after 15 seconds, the caliper reading (P) is taken. The caliper reading is taken at the very end of 15 seconds. Thereafter the major load is applied in a slow uniform manner so that the full load is attained in 10 seconds. The major load is maintained for 60 seconds (total elapsed time-85 seconds), and the caliber reading (M) is then taken; immediately thereafter, the major load is removed. The sample is left on the anvil to recover for an additional 60 seconds (total elapsed time- 145 seconds), and a final caliber reading (R) is then taken. These steps are applied for each sample.

The percent compressibility is (P-M) x 100/P. The percent recovery is (R-M) x 100/(P-M). The percent not recovered is (P-R) x 100/P. The results for the percent compressibility, percent recovery and percent not recovered are shown in Table 3.

TABLE 3

| SAMPLE | BASIS WT. LBS/1300 $F^2$ | CALIPER MILS TAPPI | DENSITY LBS/$Ft_3$ | TEST LOAD-ING PSI | INITIAL CALIPER MILS (mils-.001 Inch) | MILS COMPRESSED | % COMPRESSED OF OF INITIAL MILS CALIPER | MILS RECOVERED | % RECOVERED OF INITIAL CALIPER | MILS NOT RECOVERED | % NOT RECOVERED OF INITIAL CALIPER |
|---|---|---|---|---|---|---|---|---|---|---|---|
| AA | 74.1 | 24.8 | 27.6 | 154 | 20.6 | 6.46 | 31.4 | 3.72 | 86.7 | 2.74 | 13.3 |
|    |      |      |      | 485 | 21.2 | 10.43 | 49.2 | 5.82 | 78.2 | 4.61 | 21.8 |
|    |      |      |      | 944 | 20.4 | 11.63 | 57.0 | 5.81 | 71.5 | 5.82 | 28.5 |
| AB | 62.6 | 25.3 | 22.8 | 154 | 18.3 | 6.55 | 35.8 | 3.26 | 82.0 | 3.29 | 18.0 |
|    |      |      |      | 485 | 18.3 | 9.53 | 52.1 | 5.18 | 76.2 | 4.35 | 23.8 |
|    |      |      |      | 944 | 18.5 | 11.23 | 60.9 | 5.70 | 70.0 | 5.53 | 30.0 |
| AC | 146.2 | 26.0 | 51.9 | 154 | 24.8 | 1.92 | 7.7 | 1.04 | 96.4 | 0.88 | 3.6 |
|    |      |      |      | 485 | 25.0 | 4.13 | 16.5 | 2.22 | 92.3 | 1.92 | 7.7 |
|    |      |      |      | 944 | 25.1 | 5.51 | 22.0 | 2.61 | 88.4 | 2.90 | 11.6 |
| AD | 59.1 | 15.6 | 41.1 | 154 | 13.11 | 3.40 | 25.9 | 1.82 | 87.9 | 1.58 | 12.1 |
|    |      |      |      | 485 | 13.66 | 5.19 | 38.0 | 2.66 | 81.5 | 2.53 | 18.5 |
|    |      |      |      | 944 | 13.06 | 5.77 | 44.2 | 2.43 | 74.4 | 3.34 | 25.6 |
| AE | 54.6 | 15.4 | 32.8 | 154 | 11.92 | 3.45 | 28.9 | 1.72 | 85.5 | 1.73 | 14.5 |
|    |      |      |      | 485 | 12.22 | 4.99 | 40.8 | 2.41 | 78.9 | 2.58 | 21.1 |
|    |      |      |      | 944 | 12.73 | 5.95 | 46.7 | 2.37 | 71.9 | 3.58 | 28.1 |
| AF | 62.2 | 13.3 | 43.2 | 154 | 12.69 | 0.68 | 5.4 | 0.47 | 98.3 | 0.21 | 1.7 |
|    |      |      |      | 485 | 12.52 | 2.49 | 19.9 | 1.67 | 93.5 | 0.82 | 6.5 |
|    |      |      |      | 944 | 12.71 | 4.29 | 33.5 | 2.66 | 87.4 | 1.60 | 12.6 |

EP 0 472 942 B1

EP 0 472 942 B1

· TABLE 3 (Continued)

| SAMPLE | BASIS WT. LBS/1300 F$^2$ | CALIPER MILS TAPPI | DENSITY LBS/Ft$_3$ | TEST LOAD-ING PSI | INITIAL CALIPER MILS (mils-(.001 Inch) | MILS COMPRESSED | % COMPRESSED OF OF INITIAL MILS CALIPER | MILS RECOVERED | % RECOVERED OF INITIAL CALIPER | MILS NOT RECOVERED | % NOT RECOVERED OF INITIAL CALIPER |
|---|---|---|---|---|---|---|---|---|---|---|---|
| AG | · 54.4 | 14.9 | 33.8 | 154 | 13.46 | 0.83 | 6.2 | 0.32 | 96.2 | 0.51 | 3.8 |
| | | | | 485 | 13.60 | 2.62 | 19.3 | 0.96 | 87.8 | 1.66 | 12.2 |
| | | | | 944 | 13.28 | 5.57 | 41.9 | 2.94 | 80.2 | 2.63 | 19.8 |
| AH | 62.8 | 19.9 | 29.2 | 154 | 18.00 | 2.84 | 15.8 | 1.36 | 91.8 | 1.48 | 8.2 |
| | | | | 485 | 18.04 | 7.65 | 42.4 | 3.37 | 76.3 | 4.28 | 23.7 |
| | | | | 944 | 18.32 | 9.10 | 49.7 | 3.98 | 72.1 | 5.12 | 27.9 |
| AI | 54.5 | 21.5 | 23.4 | 154 | 19.20 | 3.22 | 16.8 | 1.84 | 92.8 | 1.38 | 7.2 |
| | | | | 485 | 18.91 | 9.25 | 48.9 | 4.04 | 72.4 | 5.21 | 27.6 |
| | | | | 944 | 19.40 | 10.76 | 55.5 | 3.96 | 64.9 | 6.80 | 35.1 |
| AJ | 65.2 | 14.05 | 42.8 | 154 | ·13.43 | 1.02 | 7.6 | 0.53 | 96.4 | 0.49 | 3.6 |
| | | | | 485 | 13.50 | 2.47 | 18.3 | 1.46 | 92.5 | 1.01 | 7.5 |
| | | | | 944 | 13.09 | 4.11 | ·31.4 | 2.22 | 85.6 | 1.89 | 14.4 |
| AK | 61.0 | 14.7 | 38.4 | 154 | 13.70 | 1.46 | 10.7 | 0.71 | 94.5 | 0.75 | 5.5 |
| | | | | 485 | 14.10 | 3.01 | 21.3 | 1.09 | 86.4 | 1.92 | 13.6 |
| | | | | 944 | 13.82 | 4.86 | 33.9 | 2.42 | 83.6 | 2.26 | 16.4 |
| AL | 115.7 | 27.9 | 38.3 | 154 | 25.72 | 8.68 | 33.7 | 5.93 | 89.3 | 2.75 | 10.7 |
| | | | | 485 | 25.86 | 11.87 | 45.9 | 8.91 | 88.6 | 2.96 | 11.4 |
| | | | | 944 | 25.89· | 12.84 | 49.6 | 9.53 | 87.2 | 3.31 | 12.8 |

TABLE 3 (Continued)

| SAMPLE | BASIS WT. LBS/1300 F$^2$ | CALIPER MILS TAPPI | DENSITY LBS/Ft$^3$ | TEST LOAD-ING PSI | INITIAL CALIPER MILS (mils-.001 Inch) | MILS COMPRESSED | % COMPRESSED OF OF INITIAL MILS CALIPER | MILS RECOVERED | % RECOVERED OF INITIAL CALIPER | MILS NOT RECOVERED | % NOT RECOVERED OF INITIAL CALIPER |
|---|---|---|---|---|---|---|---|---|---|---|---|
| AM | 144.6 | 38.1 | 35.1 | 154 | 34.94 | 11.97 | 34.2 | 9.35 | 92.5 | 2.62 | 7.5 |
|  |  |  |  | 485 | 34.94 | 17.70 | 50.7 | 14.59 | 91.1 | 3.11 | 8.9 |
|  |  |  |  | 944 | 34.88 | 19.70 | 56.5 | 16.71 | 88.0 | 2.99 | 12.0 |
| AN | -- | 35.7 | -- | 154 | 35.20 | 1.73 | 4.9 | 1.33 | 98.9 | 0.40 | 1.1 |
|  |  |  |  | 485 | 35.19 | 3.88 | 11.0 | 3.04 | 97.6 | 0.84 | 2.4 |
|  |  |  |  | 944 | 35.18 | 5.42 | 15.4 | 4.27 | 96.7 | 1.15 | 3.3 |
| AO | 223.8 | 37.4 | 55.4 | 154 | 36.50 | 2.80 | 7.7 | 1.63 | 96.8 | 1.19 | 3.2 |
|  |  |  |  | 485 | 36.44 | 6.18 | 17.0 | 3.89 | 93.8 | 2.34 | 6.2 |
|  |  |  |  | 944 | 36.51 | 8.25 | 22.6 | 4.91 | 91.1 | 3.44 | 8.9 |

As is clear from Table 3, the nonwoven materials according to the present invention have good recovery after being compressed. Moreover, densified nonwoven material according to the present invention has even further improved compressibility/recovery properties. For example, the elastomeric saturated nonwoven material of the present invention is capable of being compressed in the Z-direction about 18 percent at a load of about 485 pounds per square inch (psi)*and recovering to about 70 percent of its initial Z-direction dimension. At that load, one exemplary material was capable of being compressed about 20 percent and then recovering about 93.5 percent of its initial dimension. At a load of about 154 psi, the material of the present invention is capable of Z-direction compressibility of about 5 percent and recovery of about 80 percent. For example, one material was capable of being compressed about 5.4 percent at a load of about 154 psi and then recovering about 98 percent of its initial dimension. At a load of about 944 psi, the material of the present invention is capable of being compressed about 33 percent and recovering about 64 percent of its initial dimension. For example, one material was capable of being compressed about 33 percent at a load of about 944 psi and then recovering about 87 percent of its initial dimension.

Example 4

Some materials of the present example were formed from elastomeric nonwoven webs of meltblown polyetherester (Arnitel® EM-400 by Akzo Plastics of Arnhem, Holland) fibers having basis weights of 31.5 and 187 gsm. Other materials of this example were formed from a nonwoven web of meltblown polypropylene fibers having a basis weight of about 30.2 gsm. The nonwoven webs were saturated using the saturants and procedures of Example 1. The materials were tested for porosity, strength, elongation, total energy absorbed and trapezoidal tear strength.

The tensile properties of the elastomeric nonwoven webs were measured in both the machine direction (MD) and in the cross-machine direction (CD). The strength, elongation, total energy absorbed and trapezoidal tear strength were determined in accordance with Method 5100 of Federal Test Method Standard No. 191A utilizing a Constant Rate of Extension Tester, Instron Model 1122 Universal Testing Instrument.

The Frazier porosity was determined utilizing a Frazier Air Permeability Tester available from the Frazier Precision Instruments Company. The Frazier porosity was determined in accordance with Federal Test Method 5450, Standard No. 191A, except that the sample size was 8" X 8" instead of 7" X 7".

The basis weight of the nonwoven web was determined in accordance with Federal Test Method 5041, Standard No. 191A. The bulk (i.e., thickness) of the nonwoven web was measured with an Ames Thickness Tester Model 3223 available from B.C. Ames Company of Waltham, Massachusetts. The thickness tester was equipped with a 5" x 5" inch (25 square inches) foot. The thickness of a stack of 10 - 4" X 4" samples was measured at a load of 182 ± 5 grams. The thickness of an individual sample was calculated by dividing the measured thickness by the number of samples.

The results of testing for porosity, strength, elongation, total energy absorbed and trapezoidal tear strength are shown in Table 4. As can be seen from Table 4, the nonwoven materials of the present invention have good elongation and strength. Moreover, the elastomeric saturated nonwoven materials have retained their desirable breathability as shown by the Frazier Porosity Test results.

*1 psi = 0.069 bar

EP 0 472 942 B1

**TABLE 4**

| POLYMER | BASIS WEIGHT [A] (g/m²) | SATURANT | ADD ON [B] (%) | BASIS WEIGHT [C] (g/m²) | BULK (MM) | FRAZIER POROSITY (ft³/min/ft²) | GRAB TENSILE (kg) MD | CD | ELONGATION (%) MD | CD | TOTAL ENERGY ABSORBED (g*cm/cm²) MD | CD | TRAPEZOIDAL TEAR (kg) MD | CD |
|---|---|---|---|---|---|---|---|---|---|---|---|---|---|---|
| Amitel | 187 | None | - | 187 | 0.90 | 36 | 10.01 | 8.7 | 481 | 497 | 3250 | 2850 | 2.62 | 1.71 |
| Amitel | 3.15 | None | - | 31.5 | 0.38 | 366 | 1.51 | 1.33 | 367 | 454 | 350 | 378 | 0.12 | 0.12 |
| Polypropylene | 30.2 | None | - | 30.2 | 0.42 | 75 | 2.25 | 2.00 | 39 | 50 | 53 | 57 | 0.04 | 0.07 |
| Amitel | 187 | 1 | 56 | 295 | 1.04 | 26 | 13.1 | 13.0 | 185 | 211 | 1930 | 2100 | 1.25 | 6.12 |
| Amitel | 187 | 1 | 21 | 232 | 1.12 | 44 | 13.2 | 12.0 | 340 | 442 | 3320 | 3990 | 6.41 | 5.25 |
| Amitel | 31.5 | 1 | 41 | 40.8 | 0.42 | 229 | 2.51 | 2.16 | 262 | 206 | 483 | 434 | 0.27 | 0.14 |
| Amitel | 31.5 | 1 | 15 | 39.6 | 0.40 | 280 | 2.27 | 2.04 | 320 | 307 | 495 | 559 | 0.12 | 0.12 |
| Amitel | 187 | 2 | 54 | 294 | 1.00 | 19 | 14.4 | 13.3 | 414 | 479 | 3870 | 4150 | 2.21 | 1.02 |
| Amitel | 187 | 2 | 21 | 227 | 1.02 | 37 | 12.2 | 9.9 | 433 | 445 | 3450 | 2890 | 3.83 | 1.70 |
| Amitel | 31.5 | 2 | 39 | 46.7 | 0.42 | 214 | 2.01 | 2.03 | 348 | 427 | 446 | 539 | 0.53 | 0.21 |
| Amitel | 31.5 | 2 | 16 | 38.4 | 0.39 | 296 | 1.96 | 1.67 | 414 | 462 | 501 | 479 | 0.16 | 0.10 |
| Amitel | 187 | 3 | 55 | 295 | 1.01 | 19 | 13.7 | 11.9 | 451 | 473 | 4100 | 3780 | 5.71 | 4.09 |
| Amitel | 187 | 3 | 20 | 227 | 1.00 | 38 | 11.6 | 9.2 | 403 | 363 | 3120 | 2230 | 3.70 | 2.31 |
| Amitel | 31.5 | 3 | 43 | 50.3 | 0.41 | 208 | 2.18 | 1.92 | 347 | 417 | 484 | 512 | 0.27 | 0.16 |
| Amitel | 31.5 | 3 | 15 | 40.0 | 0.41 | 313 | 1.98 | 1.54 | 356 | 387 | 436 | 375 | 0.13 | 0.18 |
| Polypropylene | 30.2 | 3 | 54 | 45.7 | 0.41 | 31 | 3.61 | 3.19 | 31 | 40 | 69 | 77 | 0.20 | 0.13 |
| Amitel | 187 | 4 | 49 | 286 | 0.97 | 21 | 16.3 | 14.2 | 306 | 282 | 3170 | 2520 | 2.95 | 1.73 |
| Amitel | 187 | 4 | 20 | 220 | 1.03 | 42 | 11.5 | 10.8 | 261 | 293 | 1890 | 1980 | 2.14 | 1.21 |

A = Basis Weight Before Saturation
B = "Add On" by dry parts by weight of saturant to 100 dry parts by weight of fibrous web material
C = Basis Weight After Saturation

1 = Acrylic latex
2 = Nitrile Rubber latex
3 = Elastoplastic Acrylic latex
4 = Polyurethane latex

Accordingly, the present invention achieves an elastomeric nonwoven material having good compressibility and recovery in the Z-direction as well as good elasticity and breathability. For example, the materials of the present invention may be stretched about 30 percent in the machine direction and about 40 percent in cross machine direction. Some materials of the present invention may be stretched more than 150 percent in both the machine and cross machine directions. Moreover, the materials have desirable

23

abrasion resistance and launderability without loss of hand. The products can be provided to have suede-like attributes, including suppleness, flexibility, and drape while having substantial elasticity and recovery.

**Claims**

1. An elastomeric saturated nonwoven material comprising:
   a nonwoven web of elastomeric meltblown fibers; and
   a polymeric material impregnated into the fibrous nonwoven web,
   wherein said elastomeric saturated nonwoven material is capable of being compressed in the Z-direction at least about 18 percent at a load of about 485 pounds per square inch and recovering to at least about 70 percent of its initial Z-direction dimension.

2. The material according to claim 1, wherein the nonwoven web of elastomeric meltblown fibers includes microfibers.

3. The material according to one of claims 1 or 2, wherein the elastomeric nonwoven web is formed from an elastomeric material selected from the group consisting of elastic polyesters, elastic polyurethanes, elastic polyamides, elastic copolymers of ethylene and at least one vinyl monomer, and elastic A-B-A' block copolymers wherein A and A' are the same or different thermoplastic polymer, and wherein B is an elastomeric polymer block.

4. The material according to one of the preceding claims, wherein the polymeric material impregnated into the fibrous nonwoven web is an elastomeric polymeric material.

5. The material according to claim 4, wherein the elastomeric polymeric material is selected from the group consisting of polyurethanes, acrylics, vinyls, nitrile rubbers, butadiene rubbers, styrene-butadiene rubbers, natural rubbers, acetates, and copolymers thereof.

6. The material according to claim 4 or 5, wherein said elastomeric saturated nonwoven material is adapted to stretch at least about 75 percent in at least one direction.

7. The material of one of claims 4 to 6, wherein said material is capable of being compressed in the Z-direction at least about 20 percent at a load of about 485 pounds per square inch and recovering to at least about 93.5 percent of its initial Z-direction dimension.

8. The material according to one of claims 4 to 7, wherein the fibrous nonwoven web has been densified to a density of 25 to 65 pounds per cubic foot.

9. A laminate of at least one layer of saturated elastomeric material according to one of the preceding claims and at least one other layer.

10. The laminate according to claim 9, wherein the other layer is a sheet of elastomeric saturated nonwoven material.

11. The laminate according to claim 9, wherein the other layer is selected from the group consisting of scrim, woven fibrous materials, saturated resilient papers, nonwoven fibrous materials, and film.

12. The laminate according to claim 11 wherein the film is formed from a material selected from the group consisting of polyesters and polyolefins.

13. The laminate according to one of claims 9 to 12, wherein the elastomeric saturated material is adhesively joined to the other layer.

14. A method of forming an elastomeric saturated nonwoven material especially according to one of claims 1 to 8, comprising the steps of:
    impregnating a nonwoven web of elastomeric meltblown fibers with a saturant composition which includes a polymeric material so that the polymeric material is distributed throughout the fibrous nonwoven web,

24

densifying the impregnated fibrous nonwoven web to a density of from about 25 to about 65 pounds per cubic foot; and

drying the densified impregnated fibrous nonwoven web,

wherein said elastomeric saturated nonwoven material is capable of being compressed in the Z-direction at least about 18 percent at a load of about 485 pounds per square inch and recovering to at least about 70 percent of its initial Z-direction dimension.

15. The method of claim 14, wherein the fibrous nonwoven web is densified before it is impregnated with the saturant composition.

16. The method according to claim 14 or 15, wherein the saturant composition is a latex composition.

17. The method according to one of claims 14 to 16, wherein the saturant composition includes a cross-linking agent.

18. The method according to claim 17, wherein the polymeric composition is cured.

19. The method according to claim 18, wherein the curing and drying steps are performed together.

20. A method of forming a laminate of at least one layer of elastomeric saturated nonwoven material and at least one other layer, especially according to one of claims 9 to 13, the method comprising bonding at least one layer of material to the layer of elastomeric saturated nonwoven material.

21. The method according to claim 20 wherein the elastomeric saturated nonwoven material is joined to the other layer by thermal bonding, adhesive bonding, pressure bonding, ultrasonic bonding, hydraulic bonding, or laser bonding.

22. A printing blanket including, as a component thereof, or a printing cushion, comprising at least one layer of an elastomeric saturated nonwoven material comprising a nonwoven web of elastomeric meltblown fibers impregnated with a polymeric material,

wherein said elastomeric saturated nonwoven material is capable of being compressed in the Z-direction at least about 18 percent at a load of about 485 pounds per square inch and recovering to at least about 70 percent of its initial Z-direction dimension.

23. The printing blanket or cushion according to claim 22, comprising at least one layer of an elastomeric saturated nonwoven material and at least one layer including an adhesive component for attaching the blanket or cushion to a printing press cylinder.

24. The printing blanket or cushion according to claim 22 or 23, wherein the polymeric material impregnated into the elastomeric fibrous nonwoven web is an elastomeric polymeric material.

25. The printing blanket or cushion according to claim 24, wherein the elastomeric polymeric material is selected from the group consisting of polyurethanes, acrylics, vinyls, nitrile rubber, butadiene rubber, styrene-butadiene rubber, natural rubbers, acetates, and copolymers thereof.

26. The printing blanket or cushion according to claim 22, wherein the nonwoven web of elastomeric meltblown fibers includes microfibers.

27. The printing blanket of cushion according to one of claims 22 to 26, wherein the nonwoven web of elastomeric meltblown fibers is made of an elastomeric material selected from the group consisting of an elastic polyesters, elastic polyurethanes, elastic polyamides, elastic copolymers of ethylene and at least one vinyl monomer, and elastic A-B-A' block copolymers wherein A and A' are the same or different thermoplastic polymer, and wherein B is an elastomeric polymer block.

28. Use of the elastomeric saturated nonwoven material of one of claims 1 to 8, or of the laminate of one of claims 9 to 13, preferably made according to a method according to one of claims 14 to 21 in a printing blanket or a printing cushion.

29. Use of the elastomeric saturated nonwoven material of one of claims 1 to 8 or of the laminate of one of claims 9 to 13, preferably made according to a method according to one of claims 14 to 21 as vibration damping pad, gasketing, permanent care labels for garments, adhesive-coated, stretchable conformable protective coatings or masking for delicate, sensitive odd-shaped objects, automobile headliner fabric, carrier for abrasive grit coatings and safety tape.

30. The material according to claim 1 or 2 wherein the nonwoven web of elastomeric meltblown fibers comprises a mixture of meltblown fibers and at least one other type of material selected from the group consisting of wood pulp, staple fibers and particulates.

**Patentansprüche**

1. Durchtränkter Elastomer-Vliesstoff, umfassend: eine Vliesbahn aus elastomeren schmelzgeblasenen Fasern; und
ein polymeres Material, das in die Faservliesbahn imprägniert ist,
wobei der durchtränkte Elastomer-Vliesstoff in die Z-Richtung mindestens 18 Prozent bei einer Last von etwa 485 Pfund je Quadratinch komprimiert werden kann und sich auf mindestens etwa 70 Prozent seiner Anfangsdimension in die Z-Richtung erholt.

2. Stoff nach Anspruch 1, wobei die Vliesbahn aus elastomeren schmelzgeblasenen Fasern Mikrofasern enthält.

3. Stoff nach einem der Ansprüche 1 oder 2, wobei die elastomere Vliesbahn aus einem elastomeren Material gebildet wird, das ausgewählt wird aus der Gruppe bestehend aus elastischen Polyestern, elastischen Polyurethanen, elastischen Polyamiden, elastischen Copolymeren von Ethylen und mindestens einem Vinylmonomer, und elastischen A-B-A'-Blockcopolymeren, wobei A und A' gleiche oder verschiedene thermoplastische Polymere sind und wobei B ein elastomerer Polymerblock ist.

4. Stoff nach einem der vorangehenden Ansprüche, wobei das polymere Material, das in die Faservliesbahn imprägniert wird, ein elastomeres polymeres Material ist.

5. Stoff nach Anspruch 4, wobei das elastomere polymere Material ausgewählt wird aus der Gruppe bestehend aus Polyurethanen, Acrylen, Vinylen, Nitrilgummis, Butadiengummis, Styrol-Butadiengummis, Naturkautschuk, Acetaten und Copolymeren davon.

6. Stoff nach Anspruch 4 oder 5, wobei der durchtränkte Elastomer-Vliesstoff imstande ist, mindestens etwa 75 in mindestens eine Richtung gedehnt zu werden.

7. Stoff nach einem der Ansprüche 4 bis 6, wobei der Stoff imstande ist, bei einer Last von etwa 485 Pfund je Quadratinch mindestens 20 Prozent in die Z-Richtung komprimiert zu werden und sich auf mindestens 93,5 Prozent seiner Anfangsdimension in die Z-Richtung zu erholen.

8. Stoff nach einem der Ansprüche 4 bis 7, wobei die faserige Vliesbahn auf eine Dichte von 25 bis 65 Pfund je Kubikfuß verdichtet wurde.

9. Laminat aus mindestens einer Schicht aus durchtränktem Elastomerstoff nach einem der vorangehenden Ansprüche und mindestens einer anderen Schicht.

10. Laminat nach Anspruch 9, wobei die andere Schicht eine Schicht aus durchtränktem Elastomer-Vliesstoff ist.

11. Laminat nach Anspruch 9, wobei die andere Schicht ausgewählt wird aus der Gruppe bestehend aus lockerem Gelege, gewebten Faserstoffen, durchtränkten elastischen Papieren, Vliesfasermaterialien und Film.

12. Laminat nach Anspruch 11, wobei der Film aus einem Material gebildet wird, das ausgewählt ist aus der Gruppe bestehend aus Polyestern und Polyolefinen.

**13.** Laminat nach einem der Ansprüche 9 bis 12, wobei der durchtränkte Elastomerstoff klebend mit der anderen Schicht verbunden wird.

**14.** Verfahren zur Herstellung eines durchtränkten Elastomer-Vliesstoffes, insbesondere nach einem der Ansprüche 1 bis 8, welches folgende Schritte umfaßt:
Imprägnieren einer Vliesbahn aus elastomeren schmelzgeblasenen Fasern mit einer Sättigungsmittelzusammensetzung, die ein polymeres Material enthält, so daß das polymere Material in der gesamten Faservliesbahn verteilt wird,
Verdichten der imprägnierten Faservliesbahn auf eine Dichte von 25 bis 65 Pfund je Kubikfuß,
Trocknen der verdichteten imprägnierten Faservliesbahn,
wobei der durchtränkte Elastomer-Vliesstoff imstande ist, bei einer Last von etwa 485 Pfund je Quadratinch mindestens etwa 18 Prozent in die Z-Richtung komprimiert zu werden und sich auf mindestens 70 Prozent seiner Anfangsdimension in die Z-Richtung zu erholen.

**15.** Verfahren nach Anspruch 14, wobei die Faservliesbahn vor der Imprägnierung mit der Sättigungsmittelzusammensetzung verdichtet wird.

**16.** Verfahren nach Anspruch 14 oder 15, wobei die Sättigungsmittelzusammensetzung eine Latexzusammensetzung ist.

**17.** Verfahren nach einem der Ansprüche 14 bis 16, wobei die Sättigungsmittelzusammensetzung ein Vernetzungsmittel enthält.

**18.** Verfahren nach Anspruch 17, wobei die polymere Zusammensetzung gehärtet wird.

**19.** Verfahren nach Anspruch 18, wobei der Härtungs- und Trocknungsschritt gemeinsam ausgeführt werden.

**20.** Verfahren zur Bildung eines Laminates aus mindestens einer Schicht von durchtränktem Elastomer-Vliesstoff und mindestens einer anderen Schicht, insbesondere nach einem der Ansprüche 9 bis 13, wobei das Verfahren die Bindung mindestens einer Materialschicht mit der Schicht aus durchtränktem Elastomer-Vliesstoff umfaßt.

**21.** Verfahren nach Anspruch 20, wobei der durchtränkte Elastomer-Vliesstoff mit der anderen Schicht durch Wärmebindung, Klebstoffbindung, Druckbindung, Ultraschallbindung, Wasserstrahlbindung oder Laserbindung verbunden wird.

**22.** Drucktuch, enthaltend als einen Bestandteil, oder Druckkissen, umfassend mindestens eine Schicht aus einem durchtränkten Elastomer-Vliesstoff, umfassend eine Vliesbahn aus elastomeren schmelzgeblasenen Fasern, imprägniert mit einem polymeren Material,
wobei der durchtränkte Elastomer-Vliesstoff imstande ist, bei einer Last von etwa 485 Pfund je Quadratinch mindestens etwa 18 Prozent in die Z-Richtung komprimiert zu werden und sich auf mindestens 70 Prozent seiner Anfangsdimension in die Z-Richtung zu erholen.

**23.** Drucktuch oder -kissen nach Anspruch 22, umfassend mindestens eine Schicht aus durchtränktem Elastomer-Vliesstoff und mindestens eine Schicht, enthaltend eine Klebstoffkomponente zum Anheften des Tuches oder Kissens an einen Druckpreßzylinder.

**24.** Drucktuch oder -kissen nach Anspruch 22 oder 23, wobei das in die elastomere Faservliesbahn imprägnierte polymere Material ein elastomeres polymeres Material ist.

**25.** Drucktuch oder -kissen nach Anspruch 24, wobei das elastomere polymere Material ausgewählt ist aus der Gruppe bestehend aus Polyurethanen, Acrylen, Vinylen, Nitrilgummis, Butadiengummis, Styrol-Butadiengummis, Naturkautschuk, Acetaten und Copolymeren davon.

**26.** Drucktuch oder -kissen nach Anspruch 22, wobei die Vliesbahn aus elastomeren schmelzgeblasenen Fasern Mikrofasern enthält.

**27.** Drucktuch oder -kissen nach einem der Ansprüche 22 bis 26, wobei die Vliesbahn aus elastomeren schmelzgeblasenen Fasern aus einem elastomeren Material gebildet wird, das ausgewählt ist aus der Gruppe bestehend aus elastischen Polyestern, elastischen Polyurethanen, elastischen Polyamiden, elastischen Copolymeren von Ethylen und mindestens einem Vinylmonomer, und elastischen A-B-A'-Blockcopolymeren, wobei A und A' gleiche oder verschiedene thermoplastische Polymere sind und wobei B ein elastomerer Polymerblock ist.

**28.** Verwendung des durchtränkten Elastomer-Vliesstoffes nach einem der Ansprüche 1 bis 8, oder des Laminates nach einem der Ansprüche 9 bis 13, das vorzugsweise nach einem Verfahren nach einem der Ansprüche 14 bis 21 hergestellt wurde, in einem Drucktuch oder Druckkissen.

**29.** Verwendung des durchtränkten Elastomer-Vliesstoffes nach einem der Ansprüche 1 bis 8, oder des Laminates nach einem der Ansprüche 9 bis 13, das vorzugsweise nach einem Verfahren nach einem der Ansprüche 14 bis 21 hergestellt wurde, als vibrationsdämpfendes Kissen, Dichtungswerkstoff, permanente Pflegekennzeichnungen für Bekleidungsstücke, klebstoffbeschichtete, dehnbare, anpassungsfähige Schutzabdeckungen oder Überzüge für heikle, empfindliche, unregelmäßig geformte Objekte, Autodachfutterstoff, Träger für Schleifkornbeschichtungen und Sicherheitsband.

**30.** Stoff nach Anspruch 1 oder 2, wobei der Vliesstoff aus elastomeren schmelzgeblasenen Fasern eine Mischung aus schmelzgeblasenen Fasern und mindestens einer anderen Art von Material, ausgewählt aus der Gruppe bestehend aus Holzzellulose, Stapelfasern und Teilchen umfaßt.

**Revendications**

**1.** Matériau non tissé élastomère saturé comprenant :
   - une nappe non tissée de fibres élastomères obtenues par fusion-soufflage ; et
   - un matériau polymère imprégnant la nappe fibreuse non tissée,
   dans lequel ledit matériau non tissé élastomère saturé peut subir, dans la direction Z, une compression d'au moins environ 18 % sous une charge d'environ 33,47 bars (485 livres/pouce$^2$) et récupérer au moins environ 70 % de sa dimension initiale dans la direction Z.

**2.** Matériau selon la revendication 1, dans lequel la nappe non tissée de fibres élastomères obtenues par fusion-soufflage renferme des microfibres.

**3.** Matériau selon la revendication 1 ou 2, dans lequel la nappe non tissée élastomère est formée d'un matériau élastomère choisi dans le groupe comprenant les polyesters élastiques, les polyuréthanes élastiques, les polyamides élastiques, les copolymères élastiques de l'éthylène, et d'au moins un monomère vinylique, les copolymères élastiques séquencés A-B-A' où A et A' représentent des polymères thermoplastiques identiques ou différents et où B est une séquence polymère élastomère.

**4.** Matériau selon l'une des revendications précédentes, dans lequel le matériau polymère imprégnant la nappe fibreuse non tissée est un matériau polymère élastomère.

**5.** Matériau selon la revendication 4, dans lequel le matériau polymère élastomère est choisi dans le groupe comprenant les polyuréthanes, les matériaux acryliques, les matériaux vinyliques, le caoutchouc nitrile, le caoutchouc butadiène, le caoutchouc styrène-butadiène, les caoutchoucs naturels, les acétates, et les copolymères de ceux-ci.

**6.** Matériau selon la revendication 4 ou 5, dans lequel ledit matériau non tissé élastomère saturé est capable d'une extension égale à au moins environ 75 % dans au moins une direction.

**7.** Matériau selon l'une des revendications 4 à 6, dans lequel ledit matériau peut subir, dans la direction Z, une compression d'au moins environ 20 % sous une charge d'environ 33,47 bars (485 livres/pouce$^2$) et récupérer au moins environ 93,5 % de sa dimension initiale dans la direction Z.

**8.** Matériau selon l'une des revendications 4 à 7, dans lequel la nappe fibreuse non tissée a été densifiée jusqu'à une masse spécifique comprise entre 400 et 1040 kg/m$^3$ (entre 25 et 65 livres/pied$^3$).

9. Stratifié d'au moins une couche d'un matériau élastomère saturé selon l'une des revendications précédentes et d'au moins une autre couche.

10. Stratifié selon la revendication 9, dans lequel l'autre couche est une feuille de matériau non tissé élastomère saturé.

11. Stratifié selon la revendication 9, dans lequel l'autre couche est choisie dans le groupe comprenant les canevas légers, les matériaux fibreux tissés, les papiers résilients saturés, les matériaux fibreux non tissés, et les films.

12. Stratifié selon la revendication 11, dans lequel le film est formé d'un matériau choisi dans le groupe comprenant les polyesters et les polyoléfines.

13. Stratifié selon l'une des revendications 9 à 12, dans lequel le matériau saturé élastomère est réuni à l'autre couche par adhésif.

14. Procédé de formation d'un matériau non tissé élastomère saturé, en particulier selon l'une des revendications 1 à 8, comprenant les étapes suivantes :
    - l'imprégnation d'une nappe non tissée de fibres élastomères obtenues par fusion-soufflage avec une composition saturante qui renferme un matériau polymère, de telle sorte que le matériau polymère est distribué dans toute la nappe non tissée fibreuse,
    - la densification de la nappe non tissée fibreuse imprégnée jusqu'à une masse spécifique comprise entre environ 400 et environ 1040 kg/m$^3$ (entre environ 25 et environ 65 livres/pied$^3$), et
    - le séchage de la nappe fibreuse non tissée imprégnée et densifiée,
    procédé dans lequel ledit matériau non tissé élastomère saturé peut subir, dans la direction Z, une compression d'au moins environ 18 % sous une charge d'environ 33,47 bars (485 livres/pouce$^2$) et récupérer au moins environ 70 % de sa dimension initiale dans la direction Z.

15. Procédé selon la revendication 14, dans lequel la nappe non tissée fibreuse est densifiée avant d'être imprégnée par la composition saturante.

16. Procédé selon la revendication 14 ou 15, dans lequel la composition saturante est une composition de latex.

17. Procédé selon l'une des revendications 14 à 16, dans lequel la composition saturante renferme un agent réticulant.

18. Procédé selon la revendication 17, dans lequel la composition polymère est durcie.

19. Procédé selon la revendication 18, dans lequel les étapes de durcissement et de séchage sont mises en oeuvre simultanément.

20. Procédé de formation d'un stratifié d'au moins une couche de matériau non tissé élastomère saturé et d'au moins une autre couche, en particulier selon l'une des revendications 9 à 13, lequel procédé consiste à lier au moins une couche de matériau à la couche de matériau non tissé élastomère saturé.

21. Procédé selon la revendication 20, dans lequel le matériau non tissé élastomère saturé est réuni à l'autre couche par liaison thermique, liaison adhésive, liaison sous pression, liaison par ultrasons, liaison hydraulique, ou liaison au laser.

22. Blanchet d'impression comprenant, comme partie constitutive, ou coussin d'impression, constitué d'au moins une couche d'un matériau non tissé élastomère saturé composée d'une nappe non tissée de fibres élastomères obtenues par fusion-soufflage imprégnée d'un matériau polymère,
    ledit matériau non tissé élastomère saturé pouvant subir, dans la direction Z, une compression d'au moins environ 18 % sous une charge d'environ 33,47 bars (485 livres/pouce$^2$) et récupérer au moins environ 70 % de sa dimension initiale dans la direction Z.

**23.** Blanchet d'impression ou coussin d'impression selon la revendication 22, comprenant au moins une couche d'un matériau non tissé élastomère saturé et au moins une couche renfermant un composant adhésif pour réunir le blanchet d'impression ou le coussin d'impression à un cylindre de presse d'imprimerie.

**24.** Blanchet d'impression ou coussin d'impression selon la revendication 22 ou 23, dans lequel le matériau polymère imprégnant la nappe fibreuse non tissée est un matériau polymère élastomère.

**25.** Blanchet d'impression ou coussin d'impression selon la revendication 24, dans lequel le matériau polymère élastomère est choisi dans le groupe comprenant les polyuréthanes, les matériaux acryliques, les matériaux vinyliques, le caoutchouc nitrile, le caoutchouc butadiène, le caoutchouc styrène-butadiène, les caoutchoucs naturels, les acétates, et les copolymères de ceux-ci.

**26.** Blanchet d'impression ou coussin d'impression selon la revendication 22, dans lequel la nappe non tissée de fibres élastomères obtenues par fusion-soufflage renferme des microfibres.

**27.** Blanchet d'impression ou coussin d'impression selon l'une des revendications 22 à 26, dans lequel la nappe non tissée de fibres élastomères obtenues par fusion-soufflage est formée d'un matériau élastomère choisi dans le groupe comprenant les polyesters élastiques, les polyuréthanes élastiques, les polyamides élastiques, les copolymères élastiques de l'éthylène et d'au moins un monomère vinylique, les copolymères élastiques séquencés A-B-A' où A et A' représentent des polymères thermoplastiques identiques ou différents et où B est une séquence polymère élastomère.

**28.** Utilisation du matériau non tissé élastomère saturé selon l'une des revendications 1 à 8, ou du stratifié selon l'une des revendications 9 à 13, fabriqué de préférence en suivant un procédé selon l'une des revendications 14 à 21 dans un blanchet d'impression ou coussin d'impression.

**29.** Utilisation du matériau non tissé élastomère saturé selon l'une des revendications 1 à 8, ou du stratifié selon l'une des revendications 9 à 13, fabriqué de préférence en suivant un procédé selon l'une des revendications 14 à 21 comme tampons amortisseurs de vibrations, joints, étiquettes de conseils d'entretien fixées à demeure sur des vêtements, revêtements ou enveloppes protectrices revêtues d'adhésif étirables et conformables pour objets délicats, sensibles, et de formes compliquées, étoffes pour plafond d'automobile, supports pour revêtement à grains abrasifs, et bandes de sécurité.

**30.** Matériau selon la revendication 1 ou 2, dans lequel la nappe non tissée de fibres élastomères obtenues par fusion-soufflage renferme un mélange de fibres obtenues par fusion-soufflage et d'au moins un autre type de matériau choisi dans le groupe comprenant la pâte de bois, les fibres courtes et les particules.

EP 0 472 942 B1

FIG. I

31

FIG. 2

FIG. 3

FIG. 4

FIG. 5

FIG. 6